# EUROPÄISCHE PATENTSCHRIFT

(11) **EP 4 440 893 B1**
(45) Veröffentlichungstag und Bekanntmachung des Hinweises auf die Patenterteilung: **07.05.2025**
(21) Anmeldenummer: 22805903.6
(22) Anmeldetag: 02.11.2022
(51) Int. Cl.: B60T 17/18, B60T 8/92

(54) **AUSFALLSICHERES REDUNDANTES BREMSSYSTEM MIT DRUCKEINSPEISUNG ÜBER EINEN ENTLÜFTUNGSPFAD DES PRIMÄREN MODULATORS**
FAIL-SAFE REDUNDANT BRAKE SYSTEM WITH A PRESSURE SUPPLY VIA A VENTILATION PATH OF THE PRIMARY MODULATOR
SYSTÈME DE FREIN REDONDANT À SÉCURITÉ INTÉGRÉE DOTÉ D'UNE ALIMENTATION EN PRESSION PAR L'INTERMÉDIAIRE D'UNE VOIE DE VENTILATION DU MODULATEUR PRIMAIRE

(30) Priorität: 30.11.2021 DE 102021131327
(43) Veröffentlichungstag der Anmeldung: 09.10.2024
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2022/080473
(87) Internationale Veröffentlichungsnummer: WO 2023/099102

(56) Entgegenhaltungen:
- DE-A1- 102014 011 422
- DE-A1- 102016 005 318
- DE-A1- 102019 106 591

## Beschreibung

Die Erfindung betrifft ein elektronisch steuerbares pneumatisches Bremssystem für ein Fahrzeug, vorzugsweise Nutzfahrzeug, mit einer elektronischen Betriebssteuereinheit und wenigstens einem ersten Bremsdruckmodulator, der mit einem ersten Druckluftvorrat zum Empfangen von Vorratsdruck verbunden ist, und der in Abhängigkeit von ersten Betriebsbremssignalen, die von der elektronischen Betriebssteuereinheit bereitgestellt werden, einen ersten Betriebsbremsdruck an wenigsten einem ersten Betriebsbremsdruckanschluss aussteuert. Der erste Bremsdruckmodulator weist einen ersten Entlüftungsanschluss auf zum Entlüften des ersten Betriebsbremsdrucks. Das Bremssystem weist ferner eine elektronische Redundanzsteuereinheit und wenigstens einen ersten Redundanzdruckmodulator auf, der mit dem ersten Druckluftvorrat oder einem weiteren Druckluftvorrat zum Empfangen von Vorratsdruck verbunden ist, und der in Abhängigkeit von ersten Redundanzbremssignalen, die von der elektronischen Redundanzsteuereinheit bereitgestellt werden, einen ersten Redundanzbremsdruck an wenigsten einem ersten Redundanzbremsdruckanschluss aussteuert. Der erste Redundanzdruckmodulator weist einen ersten Redundanz-Entlüftungsanschluss auf zum Entlüften des ersten Redundanzbremsdrucks.

Konzepte zur redundanten Aussteuerung eines Bremsdrucks nutzen dabei in der Regel teilweise redundante Komponenten und teilweise vorhandene Komponenten, um den Bremsdruck auszusteuern. So ist beispielsweise aus DE 10 2016 005 318 A1 ein System bekannt, bei dem, für den Fall, dass eine zentrale Steuereinheit ausfällt, die anderenfalls einen Vorderachsmodulator elektronisch ansteuern würde, ein Bypassventil pneumatisch einen Redundanzdruck aussteuert, der dann dem Vorderachsmodulator bereitgestellt wird, um auf diese Weise eine redundante pneumatische Aussteuerung des Vorderachsbremsdrucks zu erreichen. Allgemein offenbart DE 10 2016 005 318 A1 ein elektronisch steuerbares pneumatisches Bremssystem mit mindestens zwei Bremskreisen, wobei mindestens einem der mindestens zwei Bremskreise ein elektrisch und pneumatisch steuerbares Steuerventil und einem weiteren der mindestens zwei Bremskreise ein elektrisch steuerbares Parkbremsventil zugeordnet ist, zum Vorgeben von Bremsdrücken zur Ansteuerung von Radbremsen des jeweiligen Bremskreises. Eine erste Steuereinheit ist vorgesehen, die ausgebildet ist, das jeweilige Steuerventil in Abhängigkeit von einer automatisiert angeforderten Fahrzeug-Soll-Verzögerung oder einer vom Fahrer vorgegebenen Betätigung über ein Bremspedal elektrisch auszusteuern. Ferner ist eine zweite Steuereinheit vorgesehen, die dazu ausgebildet ist, das Parkbremsventil in Abhängigkeit von der automatisiert angeforderten Fahrzeug-Soll-Verzögerung elektrisch zu steuern, wenn eine elektrische Ansteuerung des jeweiligen Steuerventils verhindert ist zum Ausbilden einer elektronisch pneumatisch gesteuerten Redundanz. Weiterhin ist ein einem der Steuerventile zugeordnetes Bypassventil vorgesehen, das ausgebildet ist, das zugeordnete Steuerventil pneumatisch anzusteuern, wobei die pneumatische Ansteuerung in Abhängigkeit von der automatisiert angeforderten Fahrzeug-Soll-Verzögerung oder in Abhängigkeit von der von dem Fahrer vorgenommenen Betätigung des Bremspedals erfolgt, wenn eine elektrische Ansteuerung des jeweiligen Steuerventils verhindert ist.

Eine solche Gestaltung erfordert allerdings, dass der entsprechende Redundanzanschluss des Steuerventils, nämlich des Vorderachsmodulators oder Hinterachsmodulators, funktionsfähig ist. Dadurch ist eine solche Lösung abhängig davon, dass eine Hauptaktuatorik des Steuerventils, nämlich Vorderachsmodulator oder Hinterachsmodulator, funktionsfähig ist.

Daneben gibt es andere Ansätze, die ein vollständig redundantes Bremssystem aufbauen, wie insbesondere in DE 10 2019 106 591 A1 offenbart. Gemäß der dortigen Lehre sind alle relevanten Systemelemente aufgedoppelt und so ein vollständig redundantes Bremssystem aufgebaut. Die Bremssysteme werden dann über Select-High-Ventile an den Bremsaktuatoren zusammengeführt. Bei dieser Lösung besteht aber der strömungstechnische Nachteil, dass auch das Primärsystem den Bremsdruck nur über die Select-High-Ventile an den Bremsaktuatoren aussteuern kann und somit nicht unmittelbar. Zudem ergibt sich durch die vollständige Aufdoppelung der einzelnen Bauelemente auch ein erhöhter Bauraumbedarf.

Aufgabe der vorliegenden Erfindung ist es daher, die im Grunde gut funktionierenden bestehenden Systeme weiter zu verbessern und eine hohe Verfügbarkeit bei gleichzeitig strömungstechnisch vorteilhaften Lösungen, die weniger oder keine Rückwirkung auf das Primärsystem haben.

Die Erfindung löst die Aufgabe bei einem elektronisch steuerbaren pneumatischen Bremssystem der eingangs genannten Art dadurch, dass der erste Redundanzbremsdruckanschluss des Redundanzdruckmodulators mit dem ersten Entlüftungsanschluss des ersten Bremsdruckmodulators verbunden ist, sodass der erste Redundanzbremsdruck über einen ersten Entlüftungspfad des ersten Bremsdruckmodulators an dem ersten Betriebsbremsdruckanschluss des ersten Bremsdruckmodulators aussteuerbar ist.

Der Erfindung liegt die Erkenntnis zugrunde, dass der Entlüftungspfad eines Modulators auch bei einem schweren Fehler verfügbar ist. Anders als ein Redundanzanschluss eines Modulators, der auf die Verfügbarkeit einer Hauptaktuatorik des Modulators angewiesen ist, weil beispielsweise ein am Redundanzanschluss ausgesteuerter Steuerdruck zunächst auf eine Steuerfläche eines Relaisventils wirkt, um diesen Steuerdruck volumenzuverstärken, benötigt eine Aussteuerung des Bremsdrucks über den Entlüftungspfad keine solche Aktuatorik und kann auch bei einem fehlerhaften Relaisventil in der Regel verwendet werden. Anders als bei einem Redundanzanschluss üblich wird gemäß der Erfindung vorgesehen, dass der erste Redundanzdruckmodulator einen ersten Redundanzbremsdruck aussteuert, und zwar einen Volumendruck, nicht lediglich einen Steuerdruck, der noch einer Volumenverstärkung bedarf. Der Redundanzbremsdruck wird erfindungsgemäß durch den Entlüftungspfad des ersten Bremsdruckmodulators durchgesteuert und an dem ersten Betriebsbremsdruckanschluss bereitgestellt, vorzugsweise unmoduliert. Weiterhin ist kein Select-High-Ventil erforderlich, um den Redundanzbremsdruck und Betriebsbremsdruck wechselseitig oder bedarfsweise dem Bremsaktuator zuzuführen. Es wird auf diese Weise also eine bauliche Vereinfachung der im Stand der Technik bekannten Lösung erreicht, bei gleichzeitiger Erhöhung der Stabilität und Verfügbarkeit und Optimierung der strömungstechnischen Situation. Der erste Bremsdruckmodulator kann beispielsweise für eine Vorderachse vorgesehen sein und so als Vorderachsmodulator bezeichnet werden. Ebenso kann er für eine Hinterachse vorgesehen sein und als Hinterachsmodulator bezeichnet werden. Der erste Betriebsbremsdruck wäre dann im ersteren Fall ein Vorderachsbetriebsbremsdruck, im letzteren Fall ein Hinterachsbetriebsbremsdruck. Es kann auch vorgesehen sein, dass der erste Bremsdruckmodulator nicht für eine Achse, sondern für eine Fahrzeugseite vorgesehen ist, wie beispielsweise die linke Seite, oder kreuzweise, beispielsweise für ein linkes Vorderrad und ein rechtes Hinterrad. Es soll zudem verstanden werden, dass das elektronisch steuerbare pneumatische Bremssystem zwei oder mehr Bremsdruckmodulatoren und entsprechend zwei oder mehr Redundanzdruckmodulatoren aufweisen kann. Auch kann vorgesehen sein, dass an den ersten Betriebsbremsdruckanschluss ein, zwei oder mehr Betriebsbremsaktuatoren angeschlossen sind, gegebenenfalls unter Zwischenschaltung von einem oder mehreren ABS-Ventilen. Der erste Bremsdruckmodulator kann dazu ausgebildet sein, eine radgerechte Aussteuerung von Bremsdrücken zu ermöglichen und vorzugsweise von schlupfgeregelten Bremsdrücken. Er kann aber auch dazu vorgesehen sein, lediglich eine achsengerechte Aussteuerung des Betriebsbremsdrucks zu ermöglichen, und insofern kann das Vorsehen von zusätzlich und/oder separat vorgesehenen ABS-Ventilen zweckdienlich sein.

Gemäß einer ersten bevorzugten Ausführungsform weist der erste Bremsdruckmodulator ein erstes Schnellentlüftungsventil an dem ersten Entlüftungsanschluss auf, zum Entlüften des ersten Betriebsbremsdrucks. Das Schnellentlüftungsventil kann in den Bremsdruckmodulator integriert sein oder separat von diesem beispielsweise an ein Gehäuse des ersten Bremsdruckmodulators von außen angeflanscht sein. Auch ist es denkbar, dass das erste Schnellentlüftungsventil als eigenständige Baueinheit verbaut ist. Über das Schnellentlüftungsventil kann der erste Betriebsbremsdruck rasch und unmittelbar entlüftet werden und es ist nicht erforderlich, den ersten Betriebsbremsdruck beispielsweise über eine zentrale Entlüftung eines Relaiskolbens im ersten Bremsdruckmodulator zu entlüften. An das erste Schnellentlüftungsventil kann zudem ein Schalldämpfer angeschlossen sein.

Bevorzugt weist das erste Schnellentlüftungsventil einen mit dem ersten Entlüftungspfad verbundenen ersten Schnellentlüftungsventilanschluss, einen mit der Umgebung verbundenen zweiten Schnellentlüftungsventilanschluss und einen mit dem ersten Redundanzbremsdruckanschluss verbundenen dritten Schnellentlüftungsventilanschluss auf. Der mit der Umgebung verbundene zweite Schnellentlüftungsventilanschluss kann auch zu einer Zentralentlüftung führen. Auf diese Weise kann über den Entlüftungspfad einerseits der erste Betriebsbremsdruck bedarfsweise entlüftet werden, wenn ein Abbau des Bremsdrucks im Betriebsbremszylinder gewünscht ist, andererseits auch der erste Redundanzbremsdruck eingespeist werden, nämlich über den dritten Schnellentlüftungsventilanschluss, der mit dem ersten Redundanzbremsdruckanschluss verbunden ist. Das Schnellentlüftungsventil ist vorzugsweise so gebildet, dass in einem Betriebszustand des Bremssystems, in dem der erste Redundanzdruckmodulator nicht aktiv ist, der erste Schnellentlüftungsventilanschluss mit dem zweiten Schnellentlüftungsventilanschluss offen verbunden ist. Beispielsweise kann ein gegen den dritten Schnellentlüftungsventilanschluss vorgespanntes Ventilelement vorgesehen sein, um diesen zunächst abzuschließen und einen unversperrten Entlüftungspfad vom ersten zum zweiten Schnellentlüftungsventilanschluss vorzusehen.

Gemäß einer weiteren bevorzugten Ausführungsform ist vorgesehen, dass der erste Bremsdruckmodulator ein erstes Betriebsrelaisventil aufweist, welches einen mit einem ersten Vorratsanschluss verbundenen ersten Betriebsrelaisventil-Vorratsanschluss, einen mit dem ersten Betriebsbremsdruckanschluss verbundenen ersten Betriebsrelaisventil-Arbeitsanschluss, einen einen ersten Vorsteuerdruck empfangenden ersten Betriebsrelaisventil-Steueranschluss und einen den ersten Entlüftungsanschluss bildenden oder mit diesem verbundenen ersten Betriebsrelaisventil-Entlüftungsanschluss aufweist. Das erste Betriebsrelaisventil dient im üblichen Fall dazu, den empfangenen ersten Vorsteuerdruck volumenzuverstärken und als ersten Betriebsbremsdruck auszusteuern. Wird kein Vorsteuerdruck bereitgestellt und herrscht am ersten Betriebsrelaisventil-Steueranschluss Umgebungsdruck, ist der erste Betriebsrelaisventil-Entlüftungsanschluss mit dem ersten Betriebsrelaisventil-Arbeitsanschluss verbunden. Dieser Pfad kann dann dazu verwendet werden, den ersten Redundanzbremsdruck durchzusteuern und an dem ersten Betriebsbremsdruckanschluss bereitzustellen. Die Funktionsfähigkeit des ersten Betriebsrelaisventils ist dazu nicht zwingend erforderlich. Es reicht aus, wenn der Entlüftungspfad des Betriebsrelaisventils bereitsteht und zur Aussteuerung des ersten Redundanzbremsdrucks verwendet werden kann. Hierdurch kann die Verfügbarkeit des elektronisch steuerbaren pneumatischen Bremssystems erhöht werden, auch für den Fall, dass das erste Betriebsrelaisventil nicht oder nicht richtig funktioniert.

In einer bevorzugten Weiterbildung ist der erste Betriebsrelaisventil-Entlüftungsanschluss mit dem ersten Schnellentlüftungsventilanschluss verbunden. Das Schnellentlüftungsventil kann unmittelbar in den ersten Bremsdruckmodulator integriert sein, sodass dieses baulich auch mit dem ersten Betriebsrelaisventil integriert sein kann.

Gemäß einer weiteren bevorzugten Ausführungsform umfasst das elektronisch steuerbare pneumatische Bremssystem einen zweiten Bremsdruckmodulator, der mit einem zweiten Druckluftvorrat verbunden ist zum Empfangen von Vorratsdruck, und der in Abhängigkeit von zweiten Betriebsbremssignalen, die von der elektronischen Betriebssteuereinheit bereitgestellt werden, wenigstens einen zweiten Betriebsbremsdruck an wenigstens einen zweiten Betriebsbremsdruckanschluss aussteuert. Der zweite Bremsdruckmodulator weist vorzugsweise einen zweiten Entlüftungsanschluss auf zum Entlüften des zweiten Betriebsbremsdrucks. Das elektronisch steuerbare pneumatische Bremssystem umfasst ferner bevorzugt einen zweiten Redundanzdruckmodulator, der mit dem zweiten Druckluftvorrat oder einem weiteren Druckluftvorrat verbunden ist zum Empfangen von Vorratsdruck, und der in Abhängigkeit von zweiten Redundanzbremssignalen, die von der elektronischen Redundanzsteuereinheit bereitgestellt werden, einen zweiten Redundanzbremsdruck an wenigstens einem zweiten Redundanzbremsdruckanschluss aussteuert.

Der zweite Redundanzdruckmodulator weist vorzugsweise einen zweiten Redundanz-Entlüftungsanschluss auf, zum Entlüften des zweiten Redundanzbremsdrucks. Der zweite Redundanzbremsdruckanschluss ist vorzugsweise so mit dem zweiten Entlüftungsanschluss verbunden, dass der zweite Redundanzbremsdruck über einen zweiten Entlüftungspfad des zweiten Bremsdruckmodulators an dem zweiten Betriebsbremsdruckanschluss aussteuerbar ist. Die beschriebene Ausführungsform umfasst demnach eine Verdoppelung der Bremsdruckmodulatoren und Redundanzdruckmodulatoren, um so zwei Achsen, zwei Räder, zwei Seiten oder Ähnliches des Fahrzeugs unabhängig voneinander einbremsen zu können. Für den Fall, dass der erste Bremsdruckmodulator ein Vorderachsmodulator ist, ist der zweite Bremsdruckmodulator vorzugsweise ein Hinterachsmodulator. Der erste und der zweite Bremsdruckmodulator können identisch oder verschieden ausgebildet sein. Beispielsweise kann der erste Bremsdruckmodulator als Einkanalmodulator ausgebildet sein, während der zweite Bremsdruckmodulator als Zweikanalmodulator ausgebildet ist oder umgekehrt. Auch können beide als Einkanalmodulator oder beide als Zweikanalmodulator ausgebildet sein. Das Gleiche gilt auch für den ersten und den zweiten Redundanzdruckmodulator. Der erste Redundanzdruckmodulator kann als Einkanalmodulator und der zweite Redundanzdruckmodulator als Zweikanalmodulator ausgebildet sein oder umgekehrt. Auch können beide Redundanzdruckmodulatoren als Einkanalmodulator oder Zweikanalmodulator ausgebildet sein. Dies gilt unabhängig von der Ausgestaltung des ersten und zweiten Bremsdruckmodulators. Jegliche denkbare Paarung ist hier bevorzugt. Wie auch der erste Redundanzdruckmodulator kann der zweite Redundanzdruckmodulator mit dem zweiten Druckluftvorrat oder einem weiteren Druckluftvorrat verbunden sein. Der weitere Druckluftvorrat ist vorzugsweise unabhängig vom zweiten Druckluftvorrat, um so ein redundantes Bremsen auch bei einem Ausfall des zweiten Druckluftvorrats zu verhindern. Der zweite Druckluftvorrat ist dem Primärsystem zugeordnet, während der weitere Druckluftvorrat der Redundanzebene zugeordnet sein kann. Der weitere Druckluftvorrat, der den zweiten Redundanzdruckmodulator versorgt, kann derselbe weitere Vorrat sein, der auch den ersten Redundanzdruckmodulator versorgt. Auch ist bevorzugt, dass der erste und der zweite Redundanzdruckmodulator über eigene weitere Druckluftvorräte verfügen, um so die Unabhängigkeit vom Primärsystem weiter auszugestalten.

Vorzugsweise weist der zweite Bremsdruckmodulator ein zweites Schnellentlüftungsventil an dem zweiten Entlüftungsanschluss auf, zum Entlüften des zweiten Betriebsbremsdrucks. Für das zweite Schnellentlüftungsventil gilt das oben Gesagte zum ersten Schnellentlüftungsventil analog. Auch dieses kann in den zweiten Bremsdruckmodulator integriert sein oder an ein Gehäuse des zweiten Bremsdruckmodulators angeflanscht oder als separates Element im Bremssystem verbaut sein.

Weiter ist bevorzugt, dass das zweite Schnellentlüftungsventil einen mit dem zweiten Entlüftungspfad verbundenen vierten Schnellentlüftungsventilanschluss, einen mit der Umgebung verbundenen fünften Schnellentlüftungsventilanschluss und einen mit dem zweiten Redundanzbremsdruckanschluss verbundenen sechsten Schnellentlüftungsventilanschluss aufweist. Auch hier gilt das oben zum ersten Schnellentlüftungsventil Gesagte, sodass für die Vorteile und Ausführungsformen des zweiten Schnellentlüftungsventils auf die des ersten Schnellentlüftungsventils verwiesen wird.

In ähnlicher Weise wie der erste Bremsdruckmodulator kann auch der zweite Bremsdruckmodulator ein zweites Betriebsrelaisventil aufweisen, welches einen mit einem zweiten Vorratsanschluss verbundenen zweiten Betriebsrelaisventil-Vorratsanschluss, einen mit dem zweiten Betriebsbremsdruckanschluss verbundenen zweiten Betriebsrelaisventil-Arbeitsanschluss, einen einen zweiten Vorsteuerdruck empfangenden Betriebsrelaisventil-Steueranschluss und einen den zweiten Entlüftungsanschluss bildenden oder mit diesem verbundenen zweiten Betriebsrelaisventil-Entlüftungsanschluss aufweist. Der zweite Betriebsrelaisventil-Entlüftungsanschluss kann mit dem vierten Schnellentlüftungsventilanschluss verbunden sein.

In einer weiteren Ausgestaltung ist vorgesehen, dass der zweite Bremsdruckmodulator in Abhängigkeit von dritten Betriebsbremssignalen, die von der elektronischen Betriebssteuereinheit bereitgestellt werden, einen dritten Betriebsbremsdruck an wenigstens einem dritten Betriebsbremsdruckanschluss aussteuert, wobei der zweite Bremsdruckmodulator einen dritten Entlüftungsanschluss aufweist zum Entlüften des dritten Betriebsbremsdrucks. Der zweite Redundanzdruckmodulator steuert in Abhängigkeit von dritten Redundanzbremssignalen, die von der elektronischen Redundanzsteuereinheit bereitgestellt werden, einen dritten Redundanzbremsdruck an wenigsten einem dritten Redundanzbremsdruckanschluss aus. Der zweite Redundanz-Entlüftungsanschluss ist wirksam zum Entlüften des dritten Redundanzbremsdrucks und der dritte Redundanzbremsdruckanschluss ist mit dem dritten Entlüftungsanschluss verbunden, sodass der dritte Redundanzbremsdruck über einen dritten Entlüftungspfad des zweiten Bremsdruckmodulators an dem dritten Betriebsbremsdruckanschluss aussteuerbar ist. Nach dieser Ausführungsform sind sowohl der zweite Bremsdruckmodulator als auch der zweite Redundanzdruckmodulator zweikanalig ausgebildet, sodass jeweils die zweiten und dritten Redundanzbremsdruckanschlüsse mit zweiten und dritten Entlüftungsanschlüssen verbunden sind, um über zweite und dritte Entlüftungspfade des zweiten Bremsdruckmodulators den zweiten und dritten Redundanzbremsdruck einzusteuern. Eine solche Gestaltung bietet sich vor allem an, wenn seitengerecht ein Bremsdruck ausgesteuert werden soll unter Verwendung nur eines Modulators.

Bei einer solchen Ausführungsform umfasst der zweite Bremsdruckmodulator vorzugsweise ein drittes Schnellentlüftungsventil an dem dritten Entlüftungsanschluss zum Entlüften des dritten Betriebsbremsdrucks. Bevorzugt weist das dritte Schnellentlüftungsventil einen mit dem dritten Entlüftungspfad verbundenen siebten Schnellentlüftungsventilanschluss, einen mit der Umgebung verbundenen achten Schnellentlüftungsventilanschluss und einen mit dem dritten Redundanzbremsdruckanschluss verbundenen neunten Schnellentlüftungsventilanschluss auf. Insofern entspricht das dritte Schnellentlüftungsventil in seiner Gestaltung dem ersten und dem zweiten Schnellentlüftungsventil und für die weiteren Vorteile und Weiterbildungen wird auf die obige Beschreibung zum ersten Schnellentlüftungsventil verwiesen. Diese Ausführungen gelten hier analog.

Ferner kann auch vorgesehen sein, dass der zweite Bremsdruckmodulator ein drittes Betriebsrelaisventil aufweist, welches einen mit dem zweiten Vorratsanschluss verbundenen dritten Betriebsrelais-Vorratsanschluss, einen mit dem dritten Betriebsbremsdruckanschluss verbundenen dritten Betriebsrelaisventil-Arbeitsanschluss, einen einen dritten Vorsteuerdruck empfangenden dritten Betriebsrelaisventil-Steueranschluss und einen den dritten Entlüftungsanschluss bildenden oder mit diesem verbundenen dritten Betriebsrelaisventil-Entlüftungsanschluss aufweist. Das dritte Betriebsrelaisventil ist demnach für den zweiten Kanal des auf diese Weise zweikanalig ausgebildeten zweiten Bremsdruckmodulators vorgesehen. Jeder Kanal des zweikanaligen zweiten Bremsdruckmodulators verfügt über ein eigenes Betriebsrelaisventil mit einem eigenen Entlüftungsanschluss. Bevorzugt ist auch, wie ebenfalls in den vorherigen Ausführungsformen erläutert, dass der dritte Betriebsrelaisventil-Entlüftungsanschluss mit dem siebten Schnellentlüftungsventilanschluss verbunden ist. Auf diese Weise kann dem dritten Betriebsrelaisventil-Entlüftungsanschluss der dritte Redundanzbremsdruck zugeführt werden und der dritte Betriebsrelaisventil-Entlüftungsanschluss kann entlüftet werden.

In einer weiteren bevorzugten Ausführungsform des elektronisch steuerbaren pneumatischen Bremssystems weist dieses ein Anhängersteuerventil mit wenigstens einem Anhängerbremsdruckanschluss zum Bereitstellen eines Anhängerbremsdrucks für einen Anhänger, einem Anhängervorratsanschluss zum Empfangen von Vorratsdruck und einem Anhängerentlüftungsanschluss zum Entlüften des Anhängerbremsdrucks auf. Das Anhängersteuerventil ist vorzugsweise mit der elektronischen Betriebssteuereinheit verbunden und empfängt von dieser Anhängerbremssignale und steuert vorzugsweise basierend hierauf den Anhängerbremsdruck aus. Über das Anhängersteuerventil kann ein Anhänger, der gegebenenfalls an das Fahrzeug angeschlossen ist, gebremst werden. Das Anhängersteuerventil weist hierzu vorzugsweise ein oder mehrere elektrisch schaltbare Magnetventile auf. Das Anhängersteuerventil kann zudem ein Anhänger-Relaisventil aufweisen, um einen von elektrisch schaltbaren Magnetventilen ausgesteuerten Vorsteuerdruck volumenzuverstärken und dem Anhänger bereitzustellen. Je nach Ausgestaltung des elektronisch steuerbaren pneumatischen Bremssystems für den europäischen oder den nordamerikanischen Raum kann die genaue Gestaltung des Anhängersteuerventils abweichen. Das hierin beschriebene Anhängersteuerventil soll beide Varianten umfassen.

In einer bevorzugten Weiterbildung weist der erste Redundanzdruckmodulator oder der zweite Redundanzdruckmodulator einen Anhänger-Redundanzbremsdruckanschluss zum Bereitstellen eines Anhängerredundanzdrucks auf. Typischerweise wird ein Anhängersteuerventil redundant über Drücke von einer Vorderachse des Fahrzeugs angesteuert, sodass für den Fall, dass der erste Redundanzdruckmodulator für die Vorderachse des Fahrzeugs vorgesehen ist, es der erste Redundanzdruckmodulator ist, der den Anhänger-Redundanzbremsdruckanschluss zum Bereitstellen des Anhängerredundanzdrucks aufweist. Alternativ kann aber auch der zweite Redundanzdruckmodulator, der in dem beschriebenen Fall dann vorzugsweise für die Hinterachse vorgesehen ist, derjenige sein, der den Anhängerredundanzbremsdruckanschluss zum Bereitstellen des Anhängerredundanzdrucks aufweist. Der Anhängerredundanzdruck kann grundsätzlich an einem Redundanzanschluss des Anhängersteuerventils wie üblich und im Stand der Technik bekannt ausgesteuert werden. Besonders bevorzugt aber ist der Anhänger-Redundanzbremsdruckanschluss mit dem Anhängerentlüftungsanschluss verbunden, sodass der Anhänger-Redundanzdruck über einen Anhänger-Entlüftungspfad des Anhängersteuerventils an dem Anhängerbremsdruckanschluss aussteuerbar ist. Dieselben Überlegungen, die oben in Bezug auf den ersten Bremsdruckmodulator und den zweiten Bremsdruckmodulator angestellt wurden, nämlich dahingehend, dass ein Entlüftungspfad dieser zum Ansteuern des Redundanzbremsdrucks verwendet wird, wird hier nun auf das Anhängersteuerventil angewandt. Auch bei diesem wird der Anhänger-Entlüftungspfad zum Einsteuern des Anhänger-Redundanzdrucks verwendet.

Der Anhänger-Redundanzdruck kann dem ersten Redundanzdruck, dem zweiten Redundanzdruck und/oder dem dritten Redundanzdruck entsprechen. Auch wenn der erste Redundanzdruckmodulator den Anhänger-Redundanzbremsdruckanschluss aufweist, heißt dies nicht zwingend, dass der erste Redundanzdruckmodulator als Zweikanalmodulator ausgebildet sein kann. Vielmehr kann der erste Redundanzdruckmodulator nach wie vor als Einkanalmodulator ausgebildet sein und der Anhänger-Redundanzbremsdruck entspricht dem ersten Redundanzbremsdruck, sodass der erste Redundanzbremsdruckanschluss und der Anhänger-Redundanzbremsdruckanschluss beispielsweise über eine Y-Leitung mit dem entsprechenden Ventil verbunden sind.

In einer bevorzugten Weiterbildung ist die elektronische Betriebssteuereinheit mit einer ersten Spannungsquelle verbunden und die elektronische Redundanzsteuereinheit ist mit einer zweiten Spannungsquelle verbunden. Die ersten und zweiten Spannungsquellen sind vorzugsweise unabhängig voneinander, sodass ein Fehler in der einen Spannungsquelle nicht zum Ausfall der anderen Spannungsquelle führen kann. Auf diese Weise kann die Verfügbarkeit des elektronisch steuerbaren pneumatischen Bremssystems weiter erhöht werden.

Ebenso ist vorzugsweise vorgesehen, dass der erste Druckluftvorrat und der weitere Druckluftvorrat unabhängig voneinander sind. Vorzugsweise werden der erste Druckluftvorrat und der weitere Druckluftvorrat von zwei verschiedenen und unabhängig voneinander vorgesehenen Druckluftquellen, insbesondere zwei Druckluftversorgungen, versorgt. Beispielsweise kann vorgesehen sein, dass sowohl für den ersten Druckluftvorrat als auch für den weiteren Druckluftvorrat eine eigene Luftaufbereitungseinheit vorgesehen ist. Alternativ sind der erste Druckluftvorrat und der weitere Druckluftvorrat mit einer gemeinsamen Druckluftaufbereitung verbunden, aber durch ein Mehrkreisschutzventil pneumatisch getrennt. Dasselbe gilt vorzugsweise für den zweiten Druckluftvorrat und den weiteren Druckluftvorrat. Insgesamt können vier Druckluftvorräte vorgesehen sein, beispielsweise der erste Druckluftvorrat für den ersten Bremsdruckmodulator, der weitere Druckluftvorrat für den ersten Redundanzdruckmodulator, der zweite Druckluftvorrat für den zweiten Bremsdruckmodulator und ein zweiter weiterer Druckluftvorrat für den zweiten Redundanzdruckmodulator. Darüber hinaus kann für jeden weiteren Bremsdruckmodulator ein eigener Druckluftvorrat und für jeden weiteren Redundanzdruckmodulator ein weiterer eigener Druckluftvorrat vorgesehen sein, für die das oben Gesagte gilt. Vorzugsweise sind dabei jeweils die für die Redundanzdruckmodulatoren vorgesehenen Druckluftvorräte unabhängig von den für die Bremsdruckmodulatoren vorgesehenen Druckluftvorräten. Es kann vorgesehen sein, dass die Druckluftvorräte für die Bremsdruckmodulatoren nicht unabhängig voneinander sind und auch die weiteren Druckluftvorräte für die Redundanzdruckmodulatoren nicht unabhängig voneinander sind, aber alle für die Redundanzdruckmodulatoren vorgesehenen weiteren Druckluftvorräte unabhängig von den für die Bremsdruckmodulatoren vorgesehenen Druckluftvorräten sind.

Gemäß einer weiteren bevorzugten Ausführungsform weist das elektronisch steuerbare pneumatische Bremssystem eine Einheit für autonomes Fahren und einen Fahrzeug-BUS auf, wobei die elektronische Betriebssteuereinheit und die elektronische Redundanzsteuereinheit über den Fahrzeug-BUS oder eine alternative Netzwerkkommunikation mit der Einheit für autonomes Fahren verbunden sind und von dieser Bremsanforderungssignale empfangen. Die elektronische Betriebssteuereinheit und die elektronische Redundanzsteuereinheit sind dann vorzugsweise in der Lage, die elektronischen Bremsanforderungssignale umzusetzen und den oder die Bremsdruckmodulatoren und den oder die Redundanzdruckmodulatoren entsprechend anzusteuern. Alternative Netzwerckommunikationen können beispielsweise eine direkte Verkabelung, ein CAN-BUS oder andere Systeme umfassen. Auch eine drahtlose Kommunikation kann grundsätzlich in Betracht kommen.

In einem weiteren Aspekt löst die Erfindung die eingangs genannte Aufgabe durch ein Fahrzeug, vorzugsweise Nutzfahrzeug, mit einer Vorderachse, wenigstens einer Hinterachse und einem elektronisch steuerbaren pneumatischen Bremssystem gemäß einer der vorstehend beschriebenen bevorzugten Ausführungsformen eines elektronisch steuerbaren pneumatischen Bremssystems gemäß dem ersten Aspekt der Erfindung. Es soll verstanden werden, dass das elektronisch steuerbare pneumatische Bremssystem gemäß dem ersten Aspekt der Erfindung und das Fahrzeug gemäß dem zweiten Aspekt der Erfindung gleiche und ähnliche Unteraspekte aufweisen, wie sie insbesondere in den abhängigen Ansprüchen niedergelegt sind. Insofern wird vollumfänglich auf die obige Beschreibung Bezug genommen.

Vorzugsweise ist der erste Bremsdruckmodulator der Vorderachse des Fahrzeugs und der zweite Bremsdruckmodular der wenigstens einen Hinterachse des Fahrzeugs zugeordnet. Der zweite Bremsdruckmodulator kann auch der ersten und der zweiten Hinterachse des Fahrzeugs zugeordnet sein. Der erste Bremsdruckmodulator ist vorzugsweise als Einkanalmodulator ausgebildet und der zweite Bremsdruckmodulator vorzugsweise als Zweikanalmodulator, der eine seitengerechte Aussteuerung von Bremsdrücken erlaubt.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen.

Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine schematische Darstellung eines elektronisch steuerbaren pneumatischen Bremssystems gemäß einem ersten Ausführungsbeispiel;
- Fig. 2: eine Darstellung eines ersten Bremsdruckmodulators;
- Fig. 3: den ersten Bremsdruckmodulator im Zusammenspiel mit einem ersten Redundanzdruckmodulator;
- Fig. 4: einen zweiten Bremsdruckmodulator; und
- Fig. 5: den zweiten Bremsdruckmodulator im Zusammenspiel mit dem zweiten Redundanzdruckmodulator.

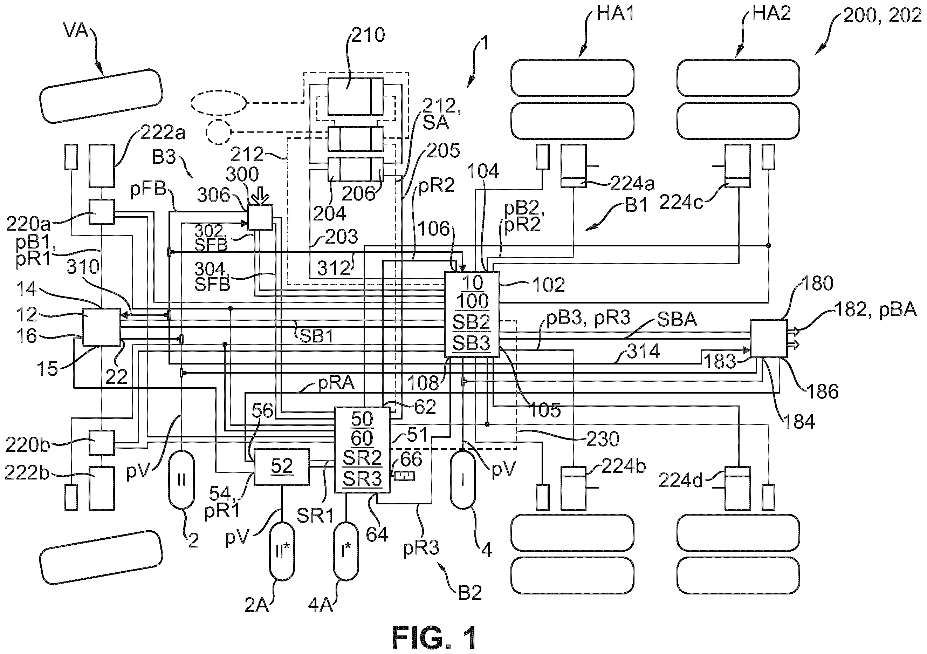

Fig. 1 illustriert ein Fahrzeug 200, nämlich insbesondere ein Nutzfahrzeug 202, mit einer ersten Achse, die hier eine Vorderachse VA ist, einer zweiten Achse, die hier eine erste Hinterachse HA1 ist sowie einer dritten Achse, die hier eine zweite Hinterachse HA2 ist. Das Fahrzeug 200 umfasst ein elektronisch steuerbares pneumatisches Bremssystem 1, welches eine Primärebene B1 und eine Sekundärebene B2 umfasst. Daneben umfasst es noch eine manuelle Ebene B3, wie nachfolgend beschrieben.

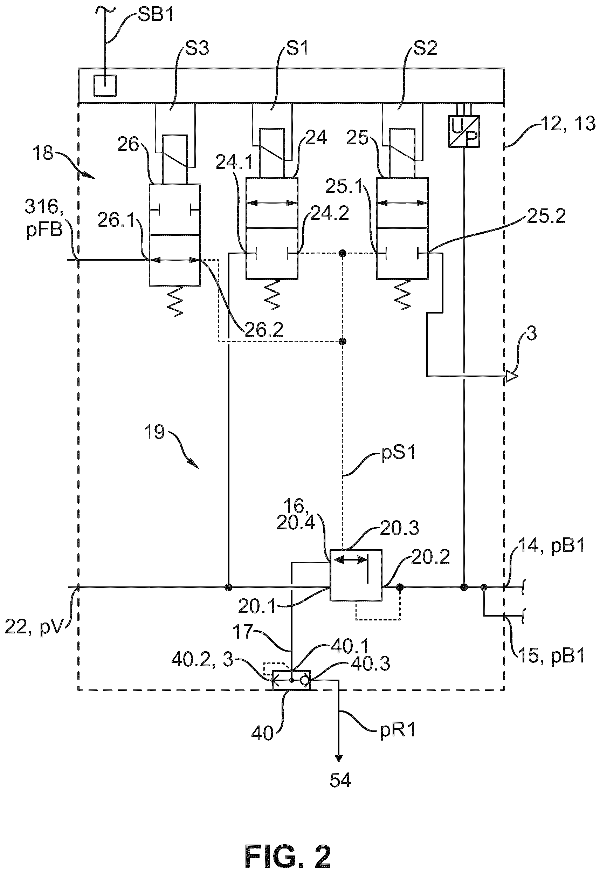

In der Primärebene B1 umfasst das elektronisch steuerbare pneumatische Bremssystem 1 eine elektronische Betriebssteuereinheit 10, die das elektronisch steuerbare pneumatische Bremssystem 1 in der Primärebene B1 steuert. Die elektronische Betriebssteuereinheit 10 ist über einen Fahrzeug-BUS 212 mit einer Einheit für autonomes Fahren 210 verbunden und empfängt von dieser Bremsanforderungssignale SA. Darüber hinaus ist die elektronische Betriebssteuereinheit 10 über eine erste Versorgungsleitung 203 mit einer ersten Spannungsquelle 204 verbunden und wird von dieser mit elektrischer Spannung versorgt. Die elektronische Betriebssteuereinheit 10 setzt die Bremsanforderungssignale SA um und steuert basierend hierauf erste Betriebsbremssignale SB1 an einem ersten Bremsdruckmodulator 12 aus. Der erste Bremsdruckmodulator 12 ist hier für die Vorderachse VA vorgesehen und kann so auch als Vorderachsmodulator bezeichnet werden. Der erste Bremsdruckmodulator 12 ist mit einem ersten Druckluftvorrat 2 verbunden und empfängt Vorratsdruck von diesem. Konkret wird der Vorratsdruck pV an einem ersten Vorratsanschluss 22 des ersten Bremsdruckmodulators 12 bereitgestellt. Der erste Bremsdruckmodulator 12 (vgl. auch Fig. 2) steuert basierend auf den empfangenen ersten Betriebsbremssignalen SB1 einen ersten Betriebsbremsdruck pB1 an einem ersten Betriebsbremsdruckanschluss 14 und in dem in Fig. 1 gezeigten Ausführungsbeispiel auch an einem ersten weiteren Betriebsbremsdruckanschluss 15 aus, wobei der erste Betriebsbremsdruckanschluss 14 und der erste weitere Betriebsbremsdruckanschluss 15 nur in Fig. 1 getrennt dargestellt sind und tatsächlich im Inneren des ersten Bremsdruckmodulators 12 verbunden sind. Der erste Betriebsbremsdruck pB1 wird in dem in Fig. 1 gezeigten Ausführungsbeispiel achsengerecht ausgesteuert, sodass an der linken und rechten Seite des Fahrzeugs 200 jeweils derselbe erste Betriebsbremsdruck pB1 bereitgestellt wird. Dieser wird zunächst über erste und zweite Vorderachs-ABS-Ventile 220a, 220b geführt, um dann an ersten und zweiten Vorderachsbremsaktuatoren 222a, 222b bereitgestellt zu werden.

Um die erste und zweite Hinterachse HA1, HA2 zu bremsen, umfasst das elektronisch steuerbare pneumatische Bremssystem 1 in der Primärebene B1 einen zweiten Bremsdruckmodulator 100, der hier für die erste und zweite Hinterachse HA1, HA2 vorgesehen ist und somit auch als Hinterachsmodulator bezeichnet werden kann. In dem in Fig. 1 gezeigten Ausführungsbeispiel ist der zweite Bremsdruckmodulator 100 mit der elektronischen Betriebssteuereinheit 10 zu einem Modul verbaut, welches hier als Zentralmodul 102 bezeichnet wird. Es soll aber verstanden werden, dass der zweite Bremsdruckmodulator 100 und die elektronische Betriebssteuereinheit 10 ebenso baulich getrennt sein können und dann beispielsweise über eine Signalleitung miteinander verbunden sein können. Intern steuert die elektronische Betriebssteuereinheit 10 zweite und dritte Betriebsbremssignale SB2, SB3 an dem zweiten Bremsdruckmodulator 100 aus, in Übereinstimmung mit den Bremsanforderungssignalen SA, die die elektronische Betriebssteuereinheit 10 von der Einheit für autonomes Fahren 210 empfangen hat.

Der zweite Bremsdruckmodulator 100 ist mit einem zweiten Druckluftvorrat 4 verbunden und empfängt Vorratsdruck pV von diesem. In Übereinstimmung mit den zweiten und dritten Betriebsbremssignalen SB2, SB3 steuert der zweite Bremsdruckmodulator 100 einen zweiten und einen dritten Betriebsbremsdruck pB2, pB3 seitengerecht aus. Der zweite Betriebsbremsdruck pB2 wird einem ersten und einem dritten Hinterachsbremsaktuator 224a, 224c und der dritte Betriebsbremsdruck pB3 einem zweiten und einem vierten Hinterachsbremsaktuator 224b, 224d bereitgestellt.

In der Sekundärebene B2 umfasst das elektronisch steuerbare pneumatische Bremssystem 1 zunächst eine elektronische Redundanzsteuereinheit 50, die dafür vorgesehen ist, das elektronisch steuerbare pneumatische Bremssystem 1 für den Fall zu steuern, wenn die Primärebene B1 einen oder mehrere Fehler hat, beispielsweise einen Stromausfall in der ersten Spannungsquelle 204, einen elektronischen Fehler in der elektronischen Betriebssteuereinheit 10 oder dergleichen. Die elektronische Redundanzsteuereinheit 50 ist über den Fahrzeug-BUS 212 ebenfalls mit der Einheit für autonomes Fahren 210 verbunden und empfängt von dieser ebenfalls Betriebsanforderungssignale SA. Im Unterschied zu der elektronischen Betriebssteuereinheit 10 ist die elektronische Redundanzsteuereinheit 50 aber über eine zweite Versorgungsleitung 205 mit einer zweiten Spannungsquelle 206 verbunden und wird von dieser mit elektrischer Spannung versorgt. Die ersten und zweiten Spannungsquellen 204, 206 sind unabhängig voneinander, sodass ein Ausfall in der ersten Spannungsquelle 204 nicht zu einem Verlust der zweiten Spannungsquelle 206 führt und umgekehrt. Die elektronische Betriebssteuereinheit 10 und die elektronische Redundanzsteuereinheit 50 sind also elektrisch unabhängig voneinander.

Um Signale austauschen zu können, sind die elektronische Betriebssteuereinheit 10 und die elektronische Redundanzsteuereinheit 50 über einen Redundanz-BUS 230 verbunden. Auf diese Weise kann die elektronische Redundanzsteuereinheit 50 die Verfügbarkeit der elektronischen Betriebssteuereinheit 10 ermitteln und erst wenn die elektronische Betriebssteuereinheit 10 nicht oder nicht mehr richtig verfügbar ist, die Steuerung des elektronisch steuerbaren pneumatischen Bremssystems 1 übernehmen.

In der Sekundärebene B2 ist ferner ein erster Redundanzdruckmodulator 52 vorgesehen, der mit der elektronischen Redundanzsteuereinheit 50 verbunden ist und von dieser erste Redundanzbremssignale SR1 empfängt. Der erste Redundanzdruckmodulator 52 ist mit einem ersten weiteren Druckluftvorrat 2A verbunden und empfängt Vorratsdruck von diesem. Grundsätzlich kann der erste Redundanzdruckmodulator 52 auch mit dem ersten Druckluftvorrat 2 verbunden sein. Eine zusätzliche Redundanz wird aber dadurch gebildet, dass der erste Redundanzdruckmodulator 52 mit dem ersten weiteren Druckluftvorrat 2A verbunden ist, der vorzugsweise unabhängig von dem ersten Druckluftvorrat 2 ist. Der erste Redundanzdruckmodulator 52 steuert in Abhängigkeit von den ersten Redundanzbremssignalen SR1 einen ersten Redundanzbremsdruck pR1 an wenigstens einem ersten Redundanzbremsdruckanschluss 54 aus. Der erste Redundanzbremsdruck pR1 wird dazu verwendet, redundant die von dem ersten Bremsdruckmodulator 12 im Betriebsfall angesteuerten Bremsaktuatoren, in dem konkreten in Fig. 1 gezeigten Fall die ersten und zweiten Vorderachsbremsaktuatoren 222a, 222b, redundant mit Druckluft zu beaufschlagen. Gemäß dem Konzept der Erfindung ist dabei vorgesehen, dass der erste Redundanzbremsdruckanschluss 54 mit einem Entlüftungsanschluss 16 des ersten Bremsdruckmodulators 12 verbunden ist, um auf diese Weise den ersten Redundanzbremsdruck pR1 durch den ersten Bremsdruckmodulator 12 durchzusteuern und an den ersten und zweiten Vorderachsbremsaktuatoren 222a, 222b gegebenenfalls unter Zwischenschaltung der hier vorgesehenen ersten und zweiten Vorderachs-ABS-Ventile 220a, 220b auszusteuern.

Der Entlüftungsanschluss 16 und der mit diesem verbundene erste Entlüftungspfad 17 (vgl. Fig. 2) steht auch im Fehlerfall der Primärebene B1 des elektronisch steuerbaren pneumatischen Bremssystems 1 zur Verfügung und ist aufgrund einer Monostabilität von Ventilen typischerweise offen. Die Entlüftung des Betriebsbremsdrucks pB1 kann in dem Betriebsfall, wenn die Steuerung des elektronisch steuerbaren pneumatischen Bremssystems durch die elektronische Betriebssteuereinheit 10 ausgeführt wird, in einem Fall über den ersten Redundanzdruckmodulator 52 erfolgen. Dieser kann zu diesem Zweck eine Entlüftung (in Fig. 1 nicht gezeigt) aufweisen. Weiterhin kann die Entlüftung des ersten Betriebsbremsdrucks pB1 auch über den ersten Bremsdruckmodulator 12 erfolgen, wie nachfolgend beschrieben werden wird.

Um nun auch die zweiten und dritten Achsen des Fahrzeugs 200, in einem konkreten Fall die erste und zweite Hinterachse HA1, HA2 redundant bremsen zu können, umfasst das elektronisch steuerbare pneumatische Bremssystem 1 in der Sekundärebene B2 auch einen zweiten Redundanzdruckmodulator 60, der dazu vorgesehen ist, den zweiten Bremsdruckmodulator 100 zu ersetzen. Der zweite Redundanzdruckmodulator 60 ist in dem hier gezeigten Ausführungsbeispiel mit der elektronischen Redundanzsteuereinheit 50 in ein Redundanzmodul 51 integriert, ähnlich wie dies oben mit Bezug auf das Zentralmodul 102 beschrieben wurde. Die elektronische Redundanzsteuereinheit 50 stellt insofern zweite und dritte Redundanzbremssignale SR2, SR3 an dem zweiten Redundanzdruckmodulator 60 bereit. Der zweite Redundanzdruckmodulator 60 ist mit einem zweiten weiteren Druckluftvorrat 4A verbunden, kann aber ebenso mit dem zweiten Druckluftvorrat 4 verbunden sein. Indem der zweite Redundanzdruckmodulator 60 mit dem zweiten weiteren Druckluftvorrat 4A verbunden ist, kann eine zusätzliche Redundanz in den Druckluftvorräten erzeugt werden. Der zweite weitere Druckluftvorrat 4A ist vorzugsweise unabhängig vom zweiten Druckluftvorrat 4. Es kann auch vorgesehen sein, dass der zweite weitere Druckluftvorrat 4A und der erste weitere Druckluftvorrat 2A ein gemeinsamer Druckluftvorrat sind und insofern gemeinsam als weiterer Druckluftvorrat bezeichnet werden können. Auch wäre denkbar, dass eine kreuzweise Redundanz eingeführt wird, indem der zweite Redundanzdruckmodulator 60 von dem zweiten Druckluftvorrat 2 versorgt wird, während der erste Redundanzdruckmodulator 52 von dem zweiten Druckluftvorrat 4 versorgt wird.

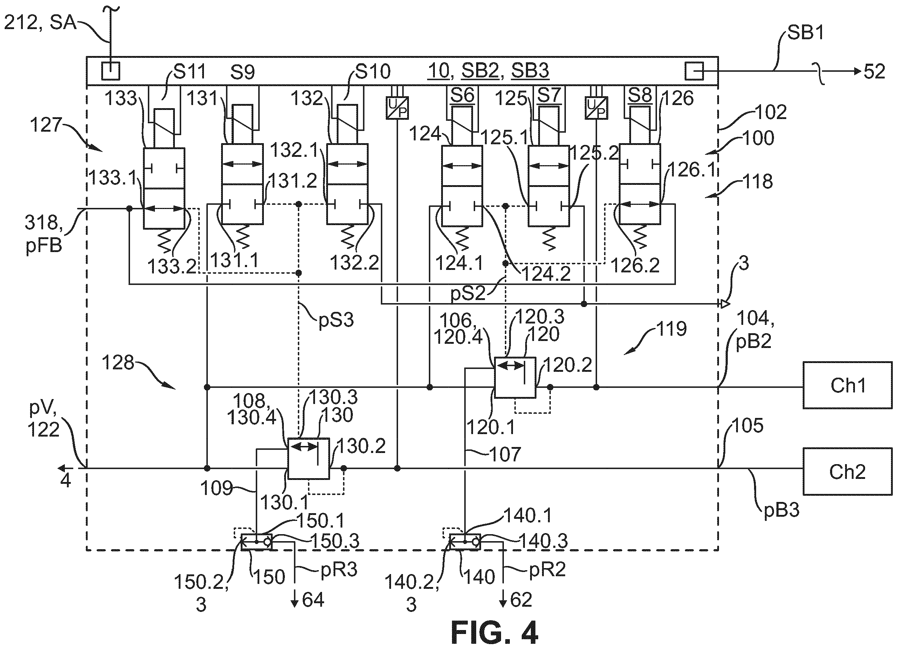

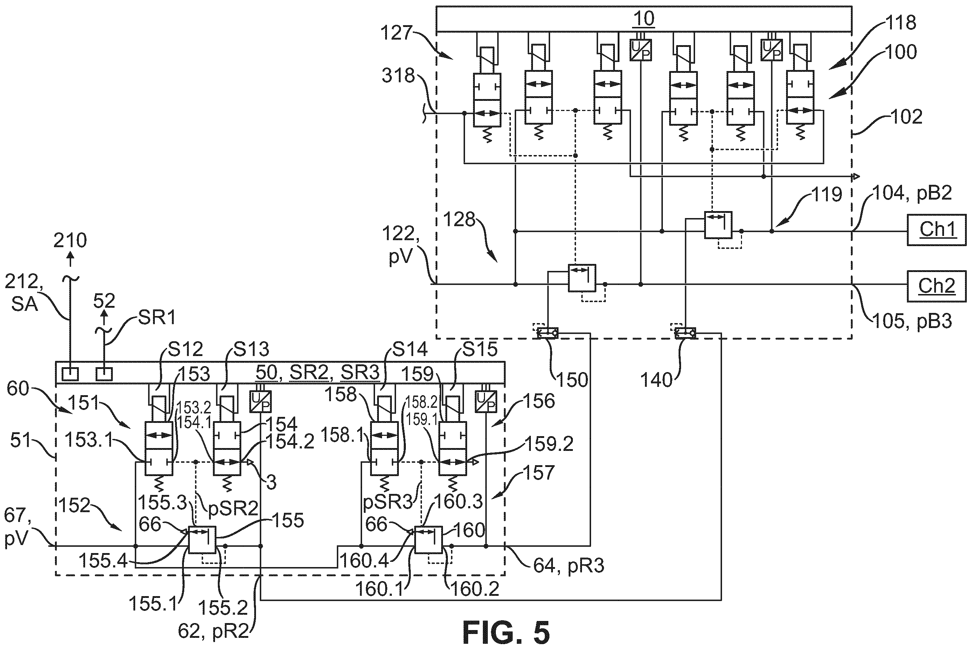

Der zweite Redundanzdruckmodulator steuert an einem zweiten Redundanzbremsdruckanschluss 62 einen zweiten Redundanzbremsdruck pR2 aus, für die rechte Fahrzeugseite und damit für den ersten und dritten Hinterachsbremsaktuator 224a, 224c und an einem dritten Redundanzbremsdruckanschluss 164 einen dritten Redundanzbremsdruck pR3 für die linke Fahrzeugseite, nämlich konkret für den zweiten und vierten Hinterachsbremsaktuator 224b, 224d. Der zweite Redundanzbremsdruckanschluss 62 ist dazu mit einem zweiten Entlüftungsanschluss 106 des zweiten Bremsdruckmodulators 100 verbunden und der dritte Redundanzbremsdruckanschluss 64 ist mit einem dritten Entlüftungsanschluss 108 des zweiten Bremsdruckmodulators 100 verbunden, wie mit Bezug auf die Fig. 4 und 5 noch weiter erläutert werden wird.

Ferner weist das elektronisch steuerbare pneumatische Bremssystem 1 gemäß dem hier gezeigten Ausführungsbeispiel (Fig. 1) ein Anhängersteuerventil 180 auf, um einen etwaig vorgesehenen Anhänger des Fahrzeugs 200 mit Druckluft zu versorgen und bremsen zu können. Das Anhängersteuerventil 180 hat einen Anhängerbremsdruckanschluss 182 zum Bereitstellen eines Anhängerbremsdrucks pBA sowie einen Anhängervorratsanschluss 183, um Vorratsdruck pV zu empfangen, hier von dem ersten Druckluftvorrat 2. Das Anhängersteuerventil 180 hat auch einen weiteren Anhängervorratsanschluss 184, der mit dem zweiten Druckluftvorrat 4 verbunden ist und ebenfalls Vorratsdruck pV empfängt. Das in Fig. 1 gezeigte elektronisch steuerbare pneumatische Bremssystem 1 ist für den nordamerikanischen Raum vorgesehen, in welchem es typisch ist, dass das Anhängersteuerventil 180 von zwei verschiedenen Druckluftvorräten versorgt wird. In europäisch gestalteten Varianten kann dies anders ausfallen.

Das Anhängersteuerventil 180 hat darüber hinaus einen Anhängerentlüftungsanschluss 186, um den Anhängerbremsdruck pBA zu entlüften. An den Anhängerentlüftungsanschluss 186 ist in dem hier gezeigten Ausführungsbeispiel der erste Redundanzdruckmodulator 52 angeschlossen, konkret über einen Anhänger-Redundanzbremsdruckanschluss 56, an dem ein Anhänger-Redundanzdruck pRA ausgesteuert wird, der in dem hier gezeigten Ausführungsbeispiel (Fig. 1) vorzugsweise dem ersten Redundanzbremsdruck pR1 entspricht. Auf diese Weise kann auch der Anhänger redundant gebremst werden unter Verwendung eines Entlüftungspfads des Anhängersteuerventils 180.

Schließlich weist das elektronisch steuerbare pneumatische Bremssystem 1 in dem hier gezeigten Ausführungsbeispiel einen Bremswertgeber 300 auf, der als Fußbremsventil ausgebildet ist. Der Bremswertgeber 300 ist über eine erste Bremswertgeberleitung 302 mit der elektronischen Betriebssteuereinheit 10 verbunden und über eine zweite Bremswertgeberleitung 304 mit der elektronischen Redundanzsteuereinheit 50. Der Bremswertegeber 300 stellt über diese beiden Leitungen Fußbremssignale SSB an der elektronischen Betriebssteuereinheit 10 und der elektronischen Redundanzsteuereinheit 50 bereit, die basierend auf den Fußbremssignalen SFB ebenfalls die ersten, zweiten und dritten Betriebsbremssignale SB1, SB2, SB3 sowie die ersten, zweiten und dritten Redundanzbremssignale SR1, SR2, SR3 aussteuern können. Darüber hinaus umfasst der Bremswertgeber 300 einen Bremswertgeber-Bremsdruckanschluss 306, an dem ein Bremswertgeber-Bremsdruck pFB ausgesteuert werden kann. Dieser wird über eine Vorderachs-Fußbremsleitung 310 an dem ersten Bremsdruckmodulator 12 bereitgestellt, über eine Hinterachs-Fußbremsleitung 312 an dem zweiten Bremsdruckmodulator 100 sowie über eine Anhänger-Fußbremsleitung 314 an dem Anhängersteuerventil 180, um auf diese Weise das Fahrzeug 200 rein pneumatisch durch den mittels des Bremswertgebers 300 ausgesteuerten Bremswertgeberbremsdruck pFB pneumatisch bremsen zu können.

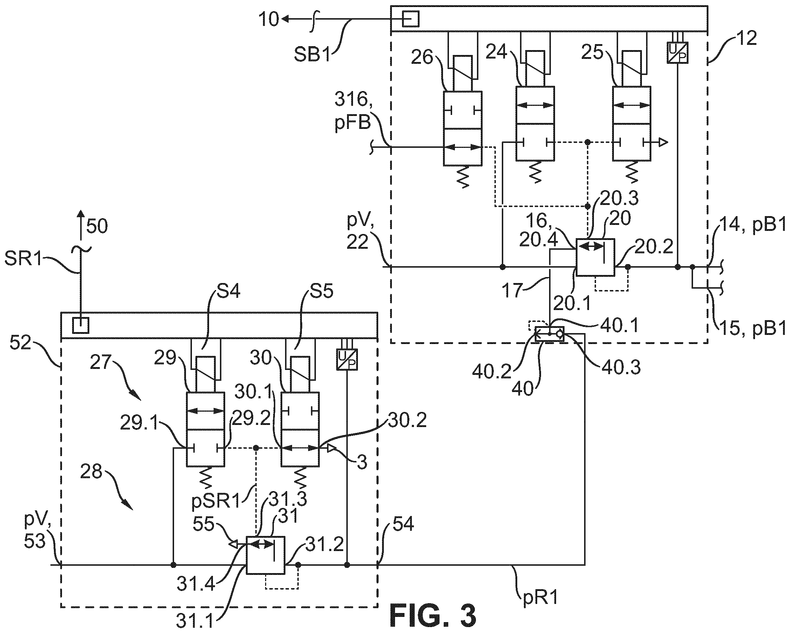

Die Fig. 2 und 3 illustrieren zunächst den ersten Bremsdruckmodulator 12 sowie den ersten Redundanzdruckmodulator 52 und deren Zusammenspiel. Der erste Bremsdruckmodulator 12 umfasst eine Vorsteuereinheit 18 und eine Hauptventileinheit 19, die hier ein erstes Betriebsrelaisventil 20 aufweist. Die erste Vorsteuereinheit 18 dient dazu, einen ersten Vorsteuerdruck pS1 an der Hauptventileinheit 19 auszusteuern. Der erste Bremsdruckmodulator 12 ist im Grunde wie bekannte Bremsdruckmodulatoren ausgebildet und umfasst einen Vorratsanschluss 22, der mit dem ersten Druckluftvorrat 2 verbunden ist und von diesem Vorratsdruck pV empfängt (vgl. Fig. 1). Er umfasst auch einen ersten Betriebsbremsdruckanschluss 14, an dem der erste Betriebsbremsdruck pB1 ausgesteuert wird. Ein erster weiterer Betriebsbremsdruckanschluss 15 ist ebenfalls vorgesehen, der fluidleitend mit dem ersten Betriebsbremsdruckanschluss 14 verbunden ist.

Die erste Vorsteuereinheit 18 umfasst ein erstes Einlassventil 24, ein erstes Auslassventil 25 sowie ein erstes Redundanzventil 26. Das erste Einlassventil 24 ist hier als monostabiles 2/2-Wege-Magnetventil ausgebildet und federbelastet in die geschlossene in Fig. 2 gezeigte Schaltstellung vorgespannt. Das erste Einlassventil 24 weist einen ersten Einlassventilanschluss 24.1 auf, der mit dem ersten Vorratsanschluss 22 verbunden ist und von diesem Vorratsdruck pV empfängt. Das erste Einlassventil 24 weist einen zweiten Einlassventilanschluss 24.2 auf, der mit dem ersten Betriebsrelaisventil-Steueranschluss 20.3 verbunden ist und an diesem den ersten Vorsteuerdruck pS1 aussteuern kann. Das erste Einlassventil 24 wird basierend auf einem ersten Schaltsignal S1 geschaltet, welches unmittelbar von der elektronischen Betriebssteuereinheit 10 bereitgestellt werden kann, ohne durch eine eigene elektronische Steuereinheit des ersten Bremsdruckmodulators 12. Für den Fall, dass der erste Bremsdruckmodulator 12 über eine eigene elektronische Steuereinheit verfügt, stellt diese basierend auf dem empfangenen ersten Betriebsbremssignal SB1 das erste Schaltsignal S1 bereit, um das erste Einlassventil 24 in die in Fig. 2 nicht gezeigte Schaltstellung zu bringen und so den ersten Steuerdruck pS1 auszusteuern. Das erste Auslassventil 25 ist ebenfalls als monostabiles 2/2-Wege-Magnetventil ausgebildet und stabil in der geschlossenen in Fig. 2 gezeigten Schaltstellung. Das erste Auslassventil 25 weist einen ersten Auslassventilanschluss 25.1 auf, der ebenfalls mit dem ersten Betriebsrelaisventil-Steueranschluss 20.3 verbunden ist. Ein zweiter Auslassventilanschluss 25.2 ist mit einer Entlüftung 3 verbunden. Das erste Auslassventil 25 kann durch ein zweites Schaltsignal S2 in die offene in Fig. 2 nicht gezeigte Schaltstellung geschaltet werden, um so den ersten Vorsteuerdruck pS1 zu entlüften. Das erste Redundanzventil 26 umfasst eine erste Redundanzventilanschluss 26.1 und einen zweiten Redundanzventilanschluss 26.2. Es ist ebenso als monostabiles 2/2-Wege-Magnetventil ausgebildet, aber in einer offene in Fig. 2 gezeigte Schaltstellung vorgespannt und bestromt in einer in geschlossenen in Fig. 2 nicht gezeigten Schaltstellung. Das erste Redundanzventil 26 kann durch ein drittes Schaltsignal S3 in die geschlossene in Fig. 2 nicht gezeigte Schaltstellung verbracht werden. Der erste Redundanzventilanschluss 26.1 ist mit einem ersten Fußbremsdruckanschluss 316 verbunden, an dem der Bremswertgeber-Bremsdruck pFB ausgesteuert werden kann. Ist das Fahrzeug 200 im autonomen Betrieb und übernimmt die Einheit für autonomes Fahren 210 die Steuerung, sollte das erste Redundanzventil 26 geschlossen sein. Nur wenn das erste Redundanzventil 26 in die offene Schaltstellung verbracht wird, kann der Bremswertgeber-Bremsdruck pFB durch das erste Redundanzventil 26 durchgesteuert und an dem ersten Betriebsrelaisventil-Steueranschluss 20.3 ausgesteuert werden. Auf diese Weise kann die manuelle Rückfallebene B3 umgesetzt werden und eine manuelle Steuerung des Fahrzeugs 200 übernommen werden.

Das erste Betriebsrelaisventil 20 umfasst einen ersten Betriebsrelaisventil-Vorratsanschluss 20.1, der mit dem Vorratsanschluss 22 verbunden ist und von diesem Vorratsdruck empfängt. Ferner umfasst es einen ersten Betriebsrelaisventil-Arbeitsanschluss 20.2, der mit dem ersten Betriebsbremsdruckanschluss 14 und gegebenenfalls dem ersten weiteren Betriebsbremsdruckanschluss 15 verbunden ist. In Abhängigkeit von dem ersten Steuerdruck pS1, der an dem ersten Betriebsrelaisventil-Steueranschluss 20.3 empfangen wird, steuert das erste Betriebsrelaisventil 20 den ersten Betriebsbremsdruck pB1 aus, der dann vorzugsweise einem volumenverstärkten Steuerdruck pS1 entspricht. Zum Entlüften des ersten Betriebsrelaisventils und insbesondere zum Entlüften des ersten Betriebsbremsdrucks pB1 umfasst das erste Betriebsrelaisventil 20 einen ersten Betriebsrelaisventil-Entlüftungsanschluss 20.4, der auch den ersten Entlüftungsanschluss 16 des ersten Bremsdruckmodulators 12 bildet. An diesen schließt sich ein erster Entlüftungspfad 17 des ersten Bremsdruckmodulators 12 an, der noch im ersten Bremsdruckmodulatorgehäuse 13 des ersten Bremsdruckmodulators 12 verläuft. In dem ersten Entlüftungspfad 17 ist ein erstes Schnellentlüftungsventil 40 vorgesehen, welches dazu dient, den erste Betriebsbremsdruck pB1 zu entlüften. Das erste Schnellentlüftungsventil 40 hat einen ersten erste Schnellentlüftungsventilanschluss 40.1, der mit dem Entlüftungspfad 17 verbunden ist und in dem hier gezeigten Fall konkret mit dem ersten Betriebsrelaisventil-Entlüftungsanschluss 20.4. Ein zweiter Schnellentlüftungsventilanschluss 40.2 ist mit der Umgebung bzw. einer Entlüftung 3 verbunden und ein dritter Schnellentlüftungsventilanschluss 40.3 ist mit dem ersten Redundanzbremsdruckanschluss 54 des ersten Redundanzdruckmodulators 52 (vgl. Fig. 1 und 3) verbunden. Auf diese Weise kann einerseits der erste Betriebsbremsdruck pB1 schnell über das Schnellentlüftungsventil 40 und den zweiten Schnellentlüftungsventilanschluss 40.2 entlüftet werden, andererseits kann der erste Redundanzdruck pR1 über das erste Schnellentlüftungsventil 40, genauer gesagt über den dritten Schnellentlüftungsventilanschluss, 40.3, den ersten Schnellentlüftungsventilanschluss 40.1 sowie den ersten Betriebsrelaisventil-Entlüftungsanschluss 20.4 eingesteuert und auf diese Weise auch an dem ersten Betriebsbremsdruckanschluss 14 und vorzugsweise dem ersten weiteren Betriebsbremsdruckanschluss 15 ausgesteuert werden.

Das erste Schnellentlüftungsventil 40 ist hier ebenfalls mit in das erste Bremsdruckmodulatorgehäuse 13 integriert, es kann aber ebenso außerhalb des ersten Bremsdruckmodulatorgehäuses angeschlossen werden. Dies ist beispielsweise dann bevorzugt, wenn der erste Entlüftungsanschluss 16 außen am ersten Bremsdruckmodulatorgehäuse 13 vorgesehen ist und nicht innerhalb dessen. In diesem Fall könnte der am Gehäuse angeordnete erste Entlüftungsanschluss 16 dann mit dem extern vorgesehenen ersten Schnellentlüftungsventil 40 verbunden sein. Wie sich aus Fig. 3 ergibt, umfasst der erste Redundanzdruckmodulator 52 eine erste Redundanz-Vorsteuereinheit 27 und eine erste Redundanzhauptventileinheit 28. Die erste Redundanz-Vorsteuereinheit 27 umfasst ein erstes Redundanz-Einlassventil 29 und ein erstes Redundanz-Auslassventil 30. Die erste Redundanz-Hauptventileinheit 28 umfasst ein erstes Redundanzrelaisventil 31. Insofern ist der erste Redundanzdruckmodulator 52 übereinstimmend mit dem ersten Bremsdruckmodulator 12 aufgebaut, bis auf dass der erste Redundanzdruckmodulator 52 nicht das erste Redundanzventil 26 umfasst, da dieser keine pneumatische Redundanz umsetzen muss. Das erste Redundanz-Einlassventil 29 ist als monostabiles 2/2-Wege-Magnetventil ausgebildet und ist stromlos in die geschlossene in Fig. 3 gezeigte Schaltstellung vorgespannt. Es weist einen ersten Redundanz-Einlassventilanschluss 29.1 auf, der mit einem ersten Redundanz-Vorratsanschluss 53 verbunden ist, der seinerseits mit dem weiteren ersten Druckluftvorrat 2A verbunden ist und von diesem Vorratsdruck pV empfängt. Ein zweiter Redundanz-Einlassventilanschluss 29.2 ist mit der ersten Redundanz-Hauptventileinheit 28 verbunden und steuert an dieser einen ersten Redundanz-Vorsteuerdruck pSR1 aus. Das erste Redundanz-Auslassventil 30 dient dazu, den ersten Redundanz-Vorsteuerdruck pSR1 zu entlüften und ist zu diesem Zweck wiederum als monostabiles 2/2-Wege-Magnetventil ausgebildet, welches allerdings stromlos und vorgespannt in der offenen Schaltstellung ist (vgl. Fig. 3). Dies ist vorteilhaft, um so den ersten Redundanz-Vorsteuerdruck pSR1 im Normalfall entlüftet zu lassen und so auch das erste Redundanzrelaisventil 31 in einer entlüfteten Stellung zu behalten.

Das erste Redundanz-Auslassventil 30 umfasst einen ersten Redundanz-Auslassventilanschluss 30.1, der mit dem ersten Redundanzrelaisventil 31 verbunden ist, sowie einen zweiten Redundanz-Auslassventilanschluss 30.2, der mit einer oder der Entlüftung 3 verbunden ist.

Das vierte und das fünfte Schaltsignal zum Schalten des ersten Redundanz-Einlassventils 29 und des ersten Redundanz-Auslassventils 30 kann wiederum unmittelbar von der elektronischen Redundanzsteuereinheit 50 bereitgestellt werden, oder der erste Redundanzdruckmodulator 52 umfasst eine eigene Steuereinheit, die das erste Redundanzbremssignal SR1 umsetzt und basierend hierauf das vierte und das fünfte Schaltsignal S4, S5 aussteuert.

Das erste Redundanzrelaisventil 31 umfasst einen ersten Redundanzrelaisventil-Vorratsanschluss 31.1, der mit dem ersten Redundanz-Vorratsanschluss 53 verbunden ist und von diesem Vorratsdruck pV empfängt. Ein erster Redundanzrelaisventil-Arbeitsanschluss 31.2 ist mit dem ersten Redundanzbremsdruckanschluss 54 verbunden, um an diesem den ersten Redundanzbremsdruck pR1 auszusteuern. Das erste Redundanzrelaisventil 31 weist ferner einen ersten Redundanzrelaisventil-Steueranschluss 31.3 auf, der mit der ersten Redundanz-Vorsteuereinheit 27 verbunden ist und von dieser den ersten Redundanz-Vorsteuerdruck pSR1 empfängt. Das erste Redundanzrelaisventil 31 volumenverstärkt diesen Druck und steuert ihn als ersten Redundanzbremsdruck pR1 aus. Darüber hinaus weist das erste Redundanzrelaisventil 31 einen ersten Redundanzrelaisventil-Entlüftungsanschluss 31.4 auf, der mit einem ersten Redundanz-Entlüftungsanschluss 55 verbunden ist oder diesen bildet. Über diesen kann der erste Redundanzbremsdruck pR1 entlüftet werden. Für den Fall, dass kein erstes Schnellentlüftungsventil 40 vorgesehen ist, sondern der erste Redundanzbremsdruckanschluss 54 beispielsweise unmittelbar mit dem ersten Entlüftungsanschluss 16, genauer gesagt mit dem ersten Betriebsrelaisventil-Entlüftungsanschluss 20.4 verbunden ist, kann auch der erste Betriebsbremsdruck pB1 über den ersten Redundanz-Entlüftungsanschluss 55 entlüftet werden.

Die Fig. 4 und 5 zeigen nun in ähnlicher Weise wie die Fig. 2 und 3 den Aufbau des zweiten Bremsdruckmodulators 100 sowie das Zusammenspiel des zweiten Bremsdruckmodulators 100 mit dem zweiten Redundanzdruckmodulator 60.

Der zweite Bremsdruckmodulator 100 ist wie eingangs beschrieben mit der elektronischen Betriebssteuereinheit 10 zu einem Zentralmodul 102 integriert. In Fig. 4 ist zu sehen, dass die elektronische Betriebssteuereinheit 10 über den Fahrzeug-BUS 212 Bremsanforderungssignale SA empfängt und auch das erste Betriebsbremssignal SB1 an den ersten Redundanzdruckmodulator 52 aussteuert.

Der zweite Bremsdruckmodulator 100 ist als Zweikanalmodulator ausgebildet und hat einen zweiten Betriebsbremsdruckanschluss 104 und einen dritten Betriebsbremsdruckanschluss 105, die unabhängig voneinander sind. Für den ersten Kanal, nämlich den zweiten Betriebsbremsdruckanschluss 104, ist eine zweite Vorsteuereinheit 118 vorgesehen und eine zweite Hauptventileinheit 119. Sowohl die zweite Vorsteuereinheit 118 als auch die zweite Hauptventileinheit 119 sind identisch zu der ersten Hauptventileinheit 19 gebildet, sodass grundsätzlich auf die obige Beschreibung Bezug genommen wird. Hier umfasst die zweite Vorsteuereinheit 118 ein zweites Einlassventil 124 mit einem dritten Einlassventilanschluss 124.1, der mit dem zweiten Vorratsanschluss 122 verbunden ist und von diesem Vorratsdruck pV empfängt. Ein vierter Einlassventilanschluss 124.2 steuert einen zweiten Vorsteuerdruck pS2 aus, der dem zweiten Betriebsrelaisventil 120 bereitgestellt wird. Das zweite Auslassventil 125 umfasst einen dritten Auslassventilanschluss 125.1, der mit dem zweiten Betriebsrelaisventil 120 verbunden ist, sowie einen vierten Auslassventilanschluss 125.2, der mit einer oder der Entlüftung 3 verbunden ist. Das zweite Auslassventil 125 wird basierend auf einem sechsten Schaltsignal, das von der elektronischen Betriebssteuereinheit 10 bereitgestellt wird, geschaltet, während das zweite Auslassventil 125 durch ein siebtes Schaltsignal S7 geschaltet wird, welches ebenfalls von der elektronischen Betriebssteuereinheit 10 bereitgestellt wird. Ein zweites Redundanzventil 126 hat einen dritten Redundanzventilanschluss 126.1, der wie mit einem zweiten Fußbremsdruckanschluss 318 verbunden ist und über diesen den Bremswertgeber-Bremsdruck pFB empfängt. Das zweite Redundanzventil kann dann an dem vierten Redundanzventilanschluss 126.2 den Bremswertgeber-Bremsdruck durchsteuern und an dem zweiten Betriebsrelaisventil 120 bereitstellen, falls es in der offenen in Fig. 4 gezeigten Schaltstellung ist. Hierüber kann wie auch bereits mit Bezug auf den ersten Bremsdruckmodulator 12 beschrieben eine pneumatische Redundanz umgesetzt werden.

Das zweite Betriebsrelaisventil 120 umfasst einen zweiten Betriebsrelaisventil-Vorratsanschluss 120.1, der mit dem zweiten Vorratsanschluss 122 verbunden ist und Vorratsdruck pV empfängt, einen zweiten Betriebsrelaisventil-Arbeitsanschluss 120.2, der mit dem zweiten Betriebsbremsdruckanschluss 104 verbunden ist, einen zweiten Betriebsrelaisventil-Steueranschluss 120.3, der den zweiten Vorsteuerdruck pS2 empfängt und mit der zweiten Vorsteuereinheit 118 verbunden ist, sowie einen zweiten Betriebsrelaisventil-Entlüftungsanschluss 120.4. Der zweite Betriebsrelaisventil-Entlüftungsanschluss 120.4 bildet in der hier gezeigten Ausführungsform den zweiten Entlüftungsanschluss des zweiten Bremsdruckmodulators 100. Dieser mündet in einen zweiten Entlüftungspfad 107, in dem, wie auch mit Bezug auf Fig. 2 und 3 beschrieben, ein zweites Schnellentlüftungsventil 140 vorgesehen ist. Das zweite Schnellentlüftungsventil 140 hat einen vierten Schnellentlüftungsventilanschluss 140.1, der mit dem zweiten Entlüftungsanschluss 106 verbunden ist bzw. genauer gesagt mit dem zweiten Betriebsrelaisventil-Entlüftungsanschluss 120.4. Ein fünfter Schnellentlüftungsventilanschluss 140.2 ist mit einer Entlüftung oder der Umgebung verbunden und ein sechster Schnellentlüftungsventilanschluss 140.3 ist mit dem zweiten Redundanzbremsdruckanschluss 62 verbunden und kann von diesem den zweiten Redundanzbremsdruck pR2 empfangen (vgl. Fig. 1). Über das zweite Schnellentlüftungsventil 140 kann also der zweite Redundanzbremsdruck pR2 dem zweiten Entlüftungspfad 107 und so dem zweiten Betriebsrelaisventil-Entlüftungsanschluss 120.4 zugeführt werden, um in einem Fehlerfall der elektronischen Betriebssteuereinheit 10, der dafür sorgt, dass beispielsweise das sechste und das siebte Schaltsignal nicht mehr richtig zur Verfügung gestellt werden können und somit auch der zweite Vorsteuerdruck pS2 nicht mehr richtig ausgesteuert werden kann, den zweiten Redundanzbremsdruck pR2 an dem zweiten Betriebsbremsdruckanschluss 104 auszusteuern, um diesen so den ersten und dritten Hinterachsbremsaktuatoren 224a, 224c bereitstellen zu können.

Für den zweiten Kanal, nämlich den dritten Betriebsbremsdruckanschluss 105, ist eine identische Ventilanordnung vorgesehen mit einer dritten Vorsteuereinheit 127 und einer dritten Hauptventileinheit 128, die ein drittes Betriebsrelaisventil 130 umfasst. Die dritte Vorsteuereinheit weist ein drittes Einlassventil 131 und ein drittes Auslassventil 132 auf. Ferner weist sie ein drittes Redundanzventil 133 auf. Das dritte Einlassventil 131 ist wiederum als monostabiles 2/2-Wege-Magnetventil gebildet und ist stromlos in der geschlossenen in Fig. 4 gezeigten Schaltstellung. Es umfasst einen fünften Einlassventilanschluss 131.1, der mit dem zweiten Vorratsanschluss 122 verbunden ist und Vorratsdruck pV empfängt. Ein sechster Einlassventilanschluss 131.2 ist mit der dritten Hauptventileinheit 128 verbunden und steuert einen dritten Vorsteuerdruck pS3 an dieser aus. Das dritte Auslassventil 132 ist mit einem fünften Auslassventilanschluss 132.1 mit der dritten Hauptventileinheit 128 verbunden und kann somit den dritten Vorsteuerdruck pS3 entlüften. Ein sechster Auslassventilanschluss 132.2 des dritten Auslassventils 132 ist mit einer oder der Entlüftung 3 verbunden. Das dritte Einlassventil 131 lässt sich durch ein neuntes Schaltsignal S9 und das dritte Auslassventil 132 durch ein zehntes Schaltsignal S10 schalten. Das dritte Redundanzventil 133 umfasst einen fünften Redundanzventilanschluss 133.1, der mit dem zweiten Fußbremsdruckanschluss 318 verbunden ist und somit den Bremswertgeber-Bremsdruck pFB empfängt. Das dritte Redundanzventil 133 ist stromlos in der offenen in Fig. 4 gezeigten Schaltstellung und kann dann an einem sechsten Redundanzventilanschluss 133.2 den Bremswertgeber-Bremsdruck pFB durchsteuern und diesen als dritten Vorsteuerdruck pS3 bereitstellen.

Das dritte Betriebsrelaisventil 130 hat einen dritten Betriebsrelaisventil-Vorratsanschluss 130.1, der mit dem zweiten Vorratsanschluss 122 verbunden ist, einen dritten Betriebsrelaisventil-Arbeitsanschluss 130.2, der mit dem dritten Betriebsbremsdruckanschluss 105 verbunden ist, einen dritten Betriebsrelaisventil-Steueranschluss 130.3, an dem der dritte Vorsteuerdruck pS3 ausgesteuert wird, sowie einen dritten Betriebsrelaisventil-Entlüftungsanschluss 130.4, der hier auch den dritten Entlüftungsanschluss 108 des zweiten Bremsdruckmodulators 100 bildet und der in einen dritten Entlüftungspfad 109 mündet. In dem dritten Entlüftungspfad 109 ist ein drittes Schnellentlüftungsventil 150 vorgesehen. Das dritte Schnellentlüftungsventil 150 ist identisch zum zweiten Schnellentlüftungsventil 140 gebildet und hat einen siebten Schnellentlüftungsventilanschluss 150.1, der mit dem dritten Entlüftungsanschluss verbunden ist, genauer gesagt mit dem dritten Betriebsrelaisventil-Entlüftungsanschluss 130.4. Ein achter Schnellentlüftungsventilanschluss 150.2 ist mit einer oder der Entlüftung 3 verbunden und ein neunter Schnellentlüftungsventilanschluss 150.3 ist mit dem dritten Redundanzbremsdruckanschluss 64 des zweiten Redundanzdruckmodulators 60 verbunden und empfängt den dritten Redundanzbremsdruck von diesem. Auch für den zweiten Kanal kann also der dritte Redundanzbremsdruck durch den dritten Entlüftungspfad 109 durchgesteuert werden und an dem dritten Betriebsbremsdruckanschluss 105 bereitgestellt werden.

Der zweite Redundanzdruckmodulator 60 ist, um dem zweiten Bremsdruckmodulator 100 zu entsprechen, auch zweikanalig aufgebaut. Er ist wie mit Bezug auf Fig. 1 beschrieben mit der elektronischen Redundanzsteuereinheit 50 in ein Redundanzmodul 51 integriert und umfasst für den zweiten Redundanzbremsdruckanschluss 62 eine Ventileinheit mit einer zweiten Redundanz-Vorsteuereinheit 151 und einer zweiten Redundanz-Hauptventileinheit 152. Die zweite Redundanz-Vorsteuereinheit 151 weist ein zweites Redundanz-Einlassventil 153 auf, das einen dritten Redundanz-Einlassventilanschluss 153.1 aufweist, der mit einem zweiten Redundanz-Vorratsanschluss 67 verbunden ist und von diesem Vorratsdruck pV empfängt. Der zweite Redundanz-Vorratsanschluss 67 ist mit dem zweiten Druckluftvorrat 4 oder dem zweiten weiteren Druckluftvorrat 4A verbunden. Ein vierter Redundanz-Einlassventilanschluss 153.2 ist mit der zweiten Redundanz-Hauptventileinheit 152 verbunden und steuert einen zweiten Redundanz-Vorsteuerdruck pSR2 an diese aus. Das zweite Redundanz-Auslassventil 154 ist mit einem dritten Redundanz-Auslassventilanschluss 154.1 mit der zweiten Redundanz-Hauptventileinheit 152 verbunden und kann so den zweiten Redundanz-Vorsteuerdruck pSR2 entlüften. Der vierte Redundanz-Auslassventilanschluss 154.2 ist mit einer oder der Entlüftung 3 verbunden. Das zweite Redundanz-Auslassventil ist wiederum als monostabiles 2/2-Wege-Magnetventil gebildet und stromlos in der offenen in Fig. 5 gezeigten Schaltstellung. Während das zweite Redundanz-Einlassventil 153 durch ein zwölftes Schaltsignal S12 geschaltet werden kann, kann das zweite Redundanz-Auslassventil 154 durch ein dreizehntes Schaltventil S13 geschaltet werden.

Die zweite Redundanz-Hauptventileinheit 152 umfasst ein zweites Redundanzrelaisventil 155 mit einem zweiten Redundanzrelaisventil-Vorratsanschluss 155.1, der mit dem zweiten Redundanz-Vorratsanschluss 67 verbunden ist und Vorratsdruck pV empfängt, einem zweiten Redundanzrelaisventil-Arbeitsanschluss 155.2, der mit dem zweiten Redundanzbremsdruckanschluss 62 verbunden ist, um den zweiten Redundanzbremsdruck pR2 an diesem auszusteuern, einem zweiten Redundanzrelaisventil-Steueranschluss 155.3, der mit der zweiten Redundanz-Vorsteuereinheit 151 verbunden ist und den zweiten Redundanzvorsteuerdruck pSR2 empfängt und einem zweiten Redundanzrelaisventil-Entlüftungsanschluss 155.4, der mit einer oder der Entlüftung 3 verbunden ist und dazu dient, den zweiten Redundanzbremsdruck pR2 zu entlüften. Für den Fall, dass kein zweites Schnellentlüftungsventil 140 vorgesehen ist, sondern der zweite Redundanzbremsdruckanschluss 62 unmittelbar mit dem zweiten Betriebsrelaisventil-Entlüftungsanschluss 120.4 verbunden ist, kann auch der zweite Betriebsbremsdruck pB2 über den zweiten Redundanzrelaisventil-Entlüftungsanschluss 155.4 entlüftet werden.

In analoger Weise umfasst der zweite Redundanzdruckmodulator für den zweiten Kanal eine Ventilanordnung, die identisch ist zu der Ventilanordnung für den ersten Kanal des zweiten Redundanzdruckmodulators 60. Konkret weist sie eine dritte Redundanz-Vorsteuereinheit 156 und eine dritte Redundanz-Hauptventileinheit 157 auf. Die dritte Redundanz-Vorsteuereinheit 156 dient dazu, einen dritten Redundanzsteuerdruck pSR3 an der dritten Redundanz-Hauptventileinheit 157 bereitzustellen. Die dritte Redundanz-Vorsteuereinheit 156 umfasst ein drittes Redundanz-Einlassventil 158 mit einem fünften Redundanz-Einlassventilanschluss 158.1, der mit dem zweiten Redundanz-Vorratsanschluss 67 verbunden ist und von diesem Vorratsdruck pV empfängt. Ein sechster Redundanz-Einlassventilanschluss 158.2 ist dann mit der dritten Redundanz-Hauptventileinheit 157 verbunden und steuert den dritten Redundanzsteuerdruck pSR3 an dieser aus. Zum Entlüften des dritten Redundanzsteuerdrucks pSR3 umfasst die dritte Redundanz-Vorsteuereinheit 156 ein drittes Redundanz-Auslassventil 159 mit einem fünften Redundanz-Auslassventilanschluss 159.1, der mit der dritten Redundanz-Hauptventileinheit 157 verbunden ist, und einen sechsten Redundanz-Auslassventilanschluss 159.2, der mit einer oder der Entlüftung 3 verbunden ist. Die dritte Redundanz-Hauptventileinheit 157 umfasst ein drittes Redundanzrelaisventil 160 mit einem dritten Redundanzrelaisventil-Vorratsanschluss 160.1, der mit dem zweiten Redundanz-Vorratsanschluss 67 verbunden ist und Vorratsdruck empfängt. Ein dritter Redundanzrelaisventil-Arbeitsanschluss 160.2 ist mit dem dritten Redundanz-Bremsdruckanschluss 64 verbunden und steuert den dritten Redundanzbremsdruck pR3 an diesem aus. Ein dritter Redundanzrelaisventil-Steueranschluss 160.3 ist mit der dritten Redundanz-Vorsteuereinheit 156 verbunden und empfängt den dritten Redundanzvorsteuerdruck pSR3 von dieser. Ein dritter Redundanzrelaisventil-Entlüftungsanschluss 160.4 ist mit einer oder der Entlüftung 3 verbunden. Auch hier gilt, dass, für den Fall, dass kein drittes Schnellentlüftungsventil 150 vorgesehen ist, sondern der dritte Redundanzbremsdruckanschluss 64 auch der dritte Betriebsbremsdruck pB3 über das dritte Redundanzrelaisventil 160 entlüftet werden kann.

Das dritte Redundanz-Einlassventil 158 kann durch ein vierzehntes Schaltsignal S14 geschaltet werden und das dritte Redundanz-Auslassventil 159 kann durch ein fünfzehntes Schaltsignal S15 geschaltet werden.

### BEZUGSZEICHENLISTE

- 1: Elektronisch steuerbares pneumatisches Bremssystem
- 2: erster Druckluftvorrat
- 2A: erster weiterer Druckluftvorrat
- 3: Entlüftung
- 4: zweiter Druckluftvorrat
- 4A: zweiter weiterer Druckluftvorrat
- 10: elektronische Betriebssteuereinheit
- 12: erster Bremsdruckmodulator
- 13: erstes Bremsdruckmodulatorgehäuse
- 14: erster Betriebsbremsdruckanschluss
- 15: erster weiterer Betriebsbremsdruckanschluss
- 16: erster Entlüftungsanschluss
- 17: erster Entlüftungspfad
- 18: erste Vorsteuereinheit
- 19: erste Hauptventileinheit
- 20: erstes Betriebsrelaisventil
- 20.1: erster Betriebsrelaisventil-Vorratsanschluss
- 20.2: erster Betriebsrelaisventil-Arbeitsanschluss
- 20.3: erster Betriebsrelaisventil-Steueranschluss
- 20.4: erster Betriebsrelaisventil-Entlüftungsanschluss
- 22: erster Vorratsanschluss
- 24: erstes Einlassventil
- 24.1: erster Einlassventilanschluss
- 24.2: zweiter Einlassventilanschluss
- 25: erstes Auslassventil
- 25.1: erster Auslassventilanschluss
- 25.2: zweiter Auslassventilanschluss
- 26: erstes Redundanzventil
- 26.1: erster Redundanzventilanschluss
- 26.2: zweiter Redundanzventilanschluss
- 27: erste Redundanz-Vorsteuereinheit
- 28: erste Redundanz-Hauptventileinheit
- 29: erstes Redundanz-Einlassventil
- 29.1: erster Redundanz-Einlassventilanschluss
- 29.2: zweiter Redundanz-Einlassventilanschluss
- 30: erstes Redundanz-Auslassventil
- 30.1: erster Redundanz-Auslassventilanschluss
- 30.2: zweiter Redundanz-Auslassventilanschluss
- 31: erstes Redundanzrelaisventil
- 31.1: erster Redundanzrelaisventil-Vorratsanschluss
- 31.2: erster Redundanzrelaisventil-Arbeitsanschluss
- 31.3: erster Redundanzrelaisventil-Steueranschluss
- 31.4: erster Redundanzrelaisventil-Entlüftungsanschluss
- 40: ersten Schnellentlüftungsventil
- 40.1: erster Schnellentlüftungsventilanschluss
- 40.2: zweiter Schnellentlüftungsventilanschluss
- 40.3: dritter Schnellentlüftungsventilanschluss
- 50: elektronische Redundanzsteuereinheit
- 51: Redundanzmodul
- 52: erster Redundanzdruckmodulator
- 53: erster Redundanz-Vorratsanschluss
- 54: erster Redundanzbremsdruckanschluss
- 55: erster Redundanz-Entlüftungsanschluss
- 56: Anhänger-Redundanzbremsdruckanschluss
- 60: zweiter Redundanzdruckmodulator
- 62: zweiter Redundanzbremsdruckanschluss
- 64: dritter Redundanzbremsdruckanschluss
- 66: zweite Redundanzmodulator-Entlüftung
- 67: zweiter Redundanz-Vorratsanschluss
- 100: zweite Bremsdruckmodulator
- 102: Zentralmodul
- 104: zweiten Betriebsbremsdruckanschluss
- 105: dritter Betriebsbremsdruckanschluss
- 106: zweiten Entlüftungsanschluss
- 107: zweiter Entlüftungspfad
- 108: dritter Entlüftungsanschluss
- 109: dritter Entlüftungspfad
- 118: zweite Vorsteuereinheit
- 119: zweite Hauptventileinheit
- 120: zweites Betriebsrelaisventil
- 120.1: zweiter Betriebsrelaisventil-Vorratsanschluss
- 120.2: zweiter Betriebsrelaisventil-Arbeitsanschluss
- 120.3: zweiter Betriebsrelaisventil-Steueranschluss
- 120.4: zweiter Betriebsrelaisventil-Entlüftungsanschluss
- 122: zweiter Vorratsanschluss
- 124: zweites Einlassventil
- 124.1: dritter Einlassventilanschluss
- 124.2: vierter Einlassventilanschluss
- 125: zweites Auslassventil
- 125.1: dritter Auslassventilanschluss
- 125.2: vierter Auslassventilanschluss
- 126: zweites Redundanzventil
- 126.1: dritter Redundanzventilanschluss
- 126.2: vierter Redundanzventilanschluss
- 127: zweite Vorsteuereinheit
- 128: zweite Hauptventileinheit
- 130: drittes Betriebsrelaisventil
- 130.1: dritter Betriebsrelaisventil-Vorratsanschluss
- 130.2: dritter Betriebsrelaisventil-Arbeitsanschluss
- 130.3: dritter Betriebsrelaisventil-Steueranschluss
- 130.4: dritter Betriebsrelaisventil-Entlüftungsanschluss
- 131: drittes Einlassventil
- 131.1: fünfter Einlassventilanschluss
- 131.2: sechster Einlassventilanschluss
- 132: drittes Auslassventil
- 132.1: fünfter Auslassventilanschluss
- 132.2: sechster Auslassventilanschluss
- 133: drittes Redundanzventil
- 133.1: fünfter Redundanzventilanschluss
- 133.2: sechster Redundanzventilanschluss
- 140: zweites Schnellentlüftungsventil
- 140.1: vierter Schnellentlüftungsventilanschluss
- 140.2: fünfter Schnellentlüftungsventilanschluss
- 140.3: sechster Schnellentlüftungsventilanschluss
- 150: drittes Schnellentlüftungsventil
- 150.1: siebter Schnellentlüftungsventilanschluss
- 150.2: achter Schnellentlüftungsventilanschluss
- 150.3: neunter Schnellentlüftungsventilanschluss
- 151: zweiten Redundanz-Vorsteuereinheit
- 152: zweite Redundanz-Hauptventileinheit
- 153: zweites Redundanz-Einlassventil
- 153.1: dritter Redundanz-Einlassventilanschluss
- 153.2: vierter Redundanz-Einlassventilanschluss
- 154: zweites Redundanz-Auslassventil
- 154.1: dritter Redundanz-Auslassventilanschluss
- 154.2: vierter Redundanz-Auslassventilanschluss
- 155: zweites Redundanzrelaisventil
- 155.1: zweiter Redundanzrelaisventil-Vorratsanschluss
- 155.2: zweiter Redundanzrelaisventil-Arbeitsanschluss
- 155.3: zweiter Redundanzrelaisventil-Steueranschluss
- 155.4: zweiter Redundanzrelaisventil-Entlüftungsanschluss
- 156: dritte Redundanz-Vorsteuereinheit
- 157: dritte Redundanz-Hauptventileinheit
- 158: drittes Redundanz-Einlassventil
- 158.1: fünfter Redundanz-Einlassventilanschluss
- 158.2: sechster Redundanz-Einlassventilanschluss
- 159: drittes Redundanz-Auslassventil
- 159.1: fünfter Redundanz-Auslassventilanschluss
- 159.2: sechster Redundanz-Auslassventilanschluss
- 160: drittes Redundanzrelaisventil
- 160.1: dritter Redundanzrelaisventil-Vorratsanschluss
- 160.2: dritter Redundanzrelaisventil-Arbeitsanschluss
- 160.3: dritter Redundanzrelaisventil-Steueranschluss
- 160.4: dritter Redundanzrelaisventil-Entlüftungsanschluss
- 180: Anhängersteuerventil
- 182: Anhängerbremsdruckanschluss
- 183: Anhängervorratsanschluss
- 184: weiteren Anhängervorratsanschluss
- 186: Anhängerentlüftungsanschluss
- 200: Fahrzeug
- 202: Nutzfahrzeug
- 203: erste Versorgungsleitung
- 204: erste Spannungsquelle
- 205: zweite Versorgungsleitung
- 206: zweite Spannungsquelle
- 210: Einheit für autonomes Fahren
- 212: Fahrzeug-BUS
- 220a: erstes Vorderachs-ABS-Ventil
- 220b: zweites Vorderachs-ABS-Ventil
- 222a: erster Vorderachsbremsaktuator
- 222b: zweiter Vorderachsbremsaktuator
- 224a: erster Hinterachsbremsaktuator
- 224b: zweiter Hinterachsbremsaktuator
- 224c: dritter Hinterachsbremsaktuator
- 224d: vierter Hinterachsbremsaktuator
- 230: Redundanz-BUS
- 300: Bremswertgeber
- 302: erste Bremswertgeberleitung
- 304: zweite Bremswertgeberleitung
- 306: Bremswertgeber-Bremsdruckanschluss
- 310: Vorderachs-Fußbremsleitung
- 312: Hinterachs-Fußbremsleitung
- 314: Anhänger-Fußbremsleitung
- 316: erster Fußbremsdruckanschluss
- 318: zweiter Fußbremsdruckanschluss
- B1: Primärebene
- B2: Sekundärebene
- B3: manuelle Ebene
- HA1: erste Hinterachse
- HA2: zweite Hinterachse
- pB1: erster Betriebsbremsdruck
- pB2: zweiter Betriebsbremsdruck
- pB3: dritter Betriebsbremsdruck
- pFB: Bremswertgeber-Bremsdruck
- pR1: erster Redundanzbremsdruck
- pR2: zweiter Redundanzbremsdruck
- pR3: dritter Redundanzbremsdruck
- pRA: Anhänger-Redundanzdruck
- pS1: erster Vorsteuerdruck
- pS2: zweiter Vorsteuerdruck
- pS3: dritter Vorsteuerdruck
- pSR1: erster Redundanz-Vorsteuerdruck
- pSR2: zweiter Redundanz-Vorsteuerdruck
- pSR3: dritter Redundanz-Vorsteuerdruck
- pV: Vorratsdruck
- SA: Bremsanforderungssignal
- SB1: erste Betriebsbremssignale
- SB2: zweite Betriebsbremssignale
- SB3: dritte Betriebsbremssignale
- SFB: Fußbremssignale
- SR1: erste Redundanzbremssignale
- SR2: zweite Redundanzbremssignale
- SR3: dritte Redundanzbremssignale
- S1: erstes Schaltsignal
- S2: zweites Schaltsignal
- S3: drittes Schaltsignal
- S4: viertes Schaltsignal
- S5: fünftes Schaltsignal
- S6: sechster Schaltsignal
- S7: siebtes Schaltsignal
- S8: achtes Schaltsignal
- S9: neuntes Schaltsignal
- S10: zehntes Schaltsignal
- S11: elftes Schaltsignal
- S12: zwölftes Schaltsignal
- S13: dreizehntes Schaltsignal
- S14: vierzehntes Schaltsignal
- S15: fünfzehntes Schaltsignal
- VA: Vorderachse

## Patentansprüche

1. Elektronisch steuerbares pneumatisches Bremssystem (1) für ein Fahrzeug (200), vorzugsweise Nutzfahrzeug (202), mit
einer elektronischen Betriebssteuereinheit (10);
wenigstens einem ersten Bremsdruckmodulator (12), der mit einem ersten Druckluftvorrat (2) verbunden ist zum Empfangen von Vorratsdruck (pV), und der in Abhängigkeit von ersten Betriebsbremssignalen (SB1), die von der elektronischen Betriebssteuereinheit (10) bereitgestellt werden, einen ersten Betriebsbremsdruck (pB1) an wenigsten einem ersten Betriebsbremsdruckanschluss (14) aussteuert,
einer elektronischen Redundanzsteuereinheit (50);
wenigstens einem ersten Redundanzdruckmodulator (52), der mit dem ersten Druckluftvorrat (2) oder einem weiteren Druckluftvorrat (2A) verbunden ist zum Empfangen von Vorratsdruck (pV), und der in Abhängigkeit von ersten Redundanzbremssignalen (SR1), die von der elektronischen Redundanzsteuereinheit (50) bereitgestellt werden, einen ersten Redundanzbremsdruck (pR1) an wenigsten einem ersten Redundanzbremsdruckanschluss (54) aussteuert,
**dadurch gekennzeichnet, dass**
der erste Bremsdruckmodulator (12) einen ersten Entlüftungsanschluss (16) aufweist zum Entlüften des ersten Betriebsbremsdrucks (pB1),
der erste Redundanzdruckmodulator (52) einen ersten Redundanz-Entlüftungsanschluss (55) aufweist zum Entlüften des ersten Redundanzbremsdrucks (pR1) und
der erste Redundanzbremsdruckanschluss (54) mit dem ersten Entlüftungsanschluss (16) verbunden ist, sodass der erste Redundanzbremsdruck (pR1) über einen ersten Entlüftungspfad (17) des ersten Bremsdruckmodulators (12) an dem ersten Betriebsbremsdruckanschluss (14) aussteuerbar ist.

2. Elektronisch steuerbares pneumatisches Bremssystem (1) nach Anspruch 1, wobei der erste Bremsdruckmodulator (12) ein erstes Schnellentlüftungsventil (40) an dem ersten Entlüftungsanschluss (16) aufweist, zum Entlüften des ersten Betriebsbremsdrucks (pB1).

3. Elektronisch steuerbares pneumatisches Bremssystem (1) nach Anspruch 2, wobei das ersten Schnellentlüftungsventil (40) einen mit dem ersten Entlüftungspfad (17) verbundenen ersten Schnellentlüftungsventilanschluss (40.1), einen mit der Umgebung verbundenen zweiten Schnellentlüftungsventilanschluss (40.2) und einen mit dem ersten Redundanzbremsdruckanschluss (54) verbundenen dritten Schnellentlüftungsventilanschluss (40.3) aufweist.

4. Elektronisch steuerbares pneumatisches Bremssystem (1) nach einem der vorstehenden Ansprüche, wobei der erste Bremsdruckmodulator (12) ein erstes Betriebsrelaisventil (20) aufweist, welches einen mit einem ersten Vorratsanschluss (22) verbundenen ersten Betriebsrelaisventil-Vorratsanschluss (20.1), einen mit dem ersten Betriebsbremsdruckanschluss (14) verbundenen ersten Betriebsrelaisventil-Arbeitsanschluss (20.2), einen ersten Vorsteuerdruck (pS1) empfangenden ersten Betriebsrelaisventil-Steueranschluss (20.3) und einen den ersten Entlüftungsanschluss (16) bildenden oder mit diesem verbundenen ersten Betriebsrelaisventil-Entlüftungsanschluss (20.4) aufweist.

5. Elektronisch steuerbares pneumatisches Bremssystem (1) nach Anspruch 3 und 4, wobei der ersten Betriebsrelaisventil-Entlüftungsanschluss (20.4) mit dem ersten Schnellentlüftungsventilanschluss (40.1) verbunden ist.

6. Elektronisch steuerbares pneumatisches Bremssystem (1) nach einem der vorstehenden Ansprüche, aufweisend
einen zweiten Bremsdruckmodulator (100), der mit einem zweiten Druckluftvorrat (4) verbunden ist zum Empfangen von Vorratsdruck (pV), und der in Abhängigkeit von zweiten Betriebsbremssignalen (SB2), die von der elektronischen Betriebssteuereinheit (10) bereitgestellt werden, wenigstens einen zweiten Betriebsbremsdruck (pB2) an wenigsten einem zweiten Betriebsbremsdruckanschluss (104) aussteuert,
wobei der zweite Bremsdruckmodulator (100) einen zweiten Entlüftungsanschluss (106) aufweist zum Entlüften des zweiten Betriebsbremsdrucks (pB2);
einem zweiten Redundanzdruckmodulator (60), der mit dem zweiten Druckluftvorrat (4) oder einem weiteren Druckluftvorrat (4A) verbunden ist zum Empfangen von Vorratsdruck (pV), und der in Abhängigkeit von zweiten Redundanzbremssignalen (SR2), die von der elektronischen Redundanzsteuereinheit (50) bereitgestellt werden, einen zweiten Redundanzbremsdruck (pR2) an wenigsten einem zweiten Redundanzbremsdruckanschluss (62) aussteuert,
wobei der zweite Redundanzdruckmodulator (60) einen zweiten Redundanz-Entlüftungsanschluss (66) aufweist zum Entlüften des zweiten Redundanzbremsdrucks (pR2), und wobei
der zweite Redundanzbremsdruckanschluss (62) mit dem zweiten Entlüftungsanschluss (106) verbunden ist, sodass der zweite Redundanzbremsdruck (pR2) über einen zweiten Entlüftungspfad (107) des zweiten Bremsdruckmodulators (100) an dem zweiten Betriebsbremsdruckanschluss (104) aussteuerbar ist.

7. Elektronisch steuerbares pneumatisches Bremssystem (1) nach Anspruch 6, wobei der zweite Bremsdruckmodulator (100) ein zweites Schnellentlüftungsventil (140) an dem zweiten Entlüftungsanschluss (106) aufweist, zum Entlüften des zweiten Betriebsbremsdrucks (pB2).

8. Elektronisch steuerbares pneumatisches Bremssystem (1) nach Anspruch 7, wobei das zweite Schnellentlüftungsventil (140) einen mit dem zweiten Entlüftungspfad (107) verbundenen vierten Schnellentlüftungsventilanschluss (140.1), einen mit der Umgebung verbundenen fünften Schnellentlüftungsventilanschluss (140.2) und einen mit dem zweiten Redundanzbremsdruckanschluss (62) verbundenen sechsten Schnellentlüftungsventilanschluss (140.3) aufweist.

9. Elektronisch steuerbares pneumatisches Bremssystem (1) nach einem der vorstehenden Ansprüche 6 bis 8, wobei der zweite Bremsdruckmodulator (100) ein zweites Betriebsrelaisventil (120) aufweist, welches einen mit einem zweiten Vorratsanschluss (122) verbundenen zweiten Betriebsrelaisventil-Vorratsanschluss (120.1), einen mit dem zweiten Betriebsbremsdruckanschluss (104) verbundenen zweiten Betriebsrelaisventil-Arbeitsanschluss (120.2), einen zweiten Vorsteuerdruck (pS2) empfangenden zweiten Betriebsrelaisventil-Steueranschluss (120.3) und einen den zweiten Entlüftungsanschluss (106) bildenden oder mit diesem verbundenen zweiten Betriebsrelaisventil-Entlüftungsanschluss (120.4) aufweist.

10. Elektronisch steuerbares pneumatisches Bremssystem (1) nach Anspruch 8 und 9, wobei der zweite Betriebsrelaisventil-Entlüftungsanschluss (120.4) mit dem vierten Schnellentlüftungsventilanschluss (140.1) verbunden ist.

11. Elektronisch steuerbares pneumatisches Bremssystem (1) nach einem der vorstehenden Ansprüche, wobei der erste Bremsdruckmodulator (12) und/oder der zweite Bremsdruckmodulator (100) zweikanalig ausgebildet ist.

12. Elektronisch steuerbares pneumatisches Bremssystem (1) nach einem der vorstehenden Ansprüche 6 bis 10, wobei
der zweite Bremsdruckmodulator (100) in Abhängigkeit von dritten Betriebsbremssignalen (SB3), die von der elektronischen Betriebssteuereinheit (10) bereitgestellt werden, einen dritten Betriebsbremsdruck (pB3) an wenigsten dritten Betriebsbremsdruckanschluss (105) aussteuert,
wobei der zweite Bremsdruckmodulator (100) einen dritten Entlüftungsanschluss (108) aufweist zum Entlüften des dritten Betriebsbremsdrucks (pB3);
wobei der zweite Redundanzdruckmodulator (60) in Abhängigkeit von dritten Redundanzbremssignalen (SR3), die von der elektronischen Redundanzsteuereinheit (50) bereitgestellt werden, einen dritten Redundanzbremsdruck (pR3) an wenigsten einem dritten Redundanzbremsdruckanschluss (64) aussteuert,
wobei der zweite Redundanz-Entlüftungsanschluss (66) zum Entlüften des dritten Redundanzbremsdrucks (pR3) wirksam ist, und wobei
der dritte Redundanzbremsdruckanschluss (64) mit dem dritten Entlüftungsanschluss (108) verbunden ist, sodass der dritte Redundanzbremsdruck (pR3) über einen dritten Entlüftungspfad (109) des zweiten Bremsdruckmodulators (100) an dem dritten Betriebsbremsdruckanschluss (105) aussteuerbar ist.

13. Elektronisch steuerbares pneumatisches Bremssystem (1) nach Anspruch 12, wobei der zweite Bremsdruckmodulator (100) ein drittes Schnellentlüftungsventil (150) an dem dritten Entlüftungsanschluss (108) aufweist, zum Entlüften des dritten Betriebsbremsdrucks (pB3).

14. Elektronisch steuerbares pneumatisches Bremssystem (1) nach Anspruch 13, wobei das dritte Schnellentlüftungsventil (150) einen mit dem dritten Entlüftungspfad (109) verbundenen siebten Schnellentlüftungsventilanschluss (150.1), einen mit der Umgebung verbundenen achten Schnellentlüftungsventilanschluss (150.2) und einen mit dem dritten Redundanzbremsdruckanschluss (64) verbundenen neunten Schnellentlüftungsventilanschluss (150.3) aufweist.

15. Elektronisch steuerbares pneumatisches Bremssystem (1) nach einem der vorstehenden Ansprüche 12 bis 14, wobei der zweite Bremsdruckmodulator (100) ein drittes Betriebsrelaisventil (130) aufweist, welches einen mit dem zweiten Vorratsanschluss (122) verbundenen dritten Betriebsrelaisventil-Vorratsanschluss (130.1), einen mit dem dritten Betriebsbremsdruckanschluss (105) verbundenen dritten Betriebsrelaisventil-Arbeitsanschluss (130.2), einen einen dritten Vorsteuerdruck (pS3) empfangenden dritten Betriebsrelaisventil-Steueranschluss (130.3) und einen den dritten Entlüftungsanschluss (108) bildenden oder mit diesem verbundenen dritten Betriebsrelaisventil-Entlüftungsanschluss (130.4) aufweist.

16. Elektronisch steuerbares pneumatisches Bremssystem (1) nach Anspruch 14 und 15, wobei der dritte Betriebsrelaisventil-Entlüftungsanschluss (130.4) mit dem siebten Schnellentlüftungsventilanschluss (150.1) verbunden ist.

17. Elektronisch steuerbares pneumatisches Bremssystem (1) nach einem der vorstehenden Ansprüche, aufweisend
ein Anhängersteuerventil (180) wenigstens mit einem Anhängerbremsdruckanschluss (182) zum Bereitstellen eines Anhängerbremsdrucks (pBA) für einen Anhänger, einem Anhängervorratsanschluss (183) zum Empfangen von Vorratsdruck (pV), und einem Anhängerentlüftungsanschluss (186) zum Entlüften des Anhängerbremsdrucks (pBA);
wobei das Anhängersteuerventil (180) mit der elektronischen Betriebssteuereinheit (10) verbunden ist und von diesen Anhängerbremssignalen (SBA) empfängt und basierend hierauf den Anhängerbremsdruck (pBA) aussteuert; und

18. Elektronisch steuerbares pneumatisches Bremssystem (1) nach Anspruch 17, wobei
der erste Redundanzdruckmodulator (52) oder der zweite Redundanzdruckmodulator (100) einen Anhänger-Redundanzbremsdruckanschluss (56) zum Bereitstellen eines Anhänger-Redundanzdrucks (pRA) aufweist,
und wobei der Anhänger-Redundanzbremsdruckanschluss (56) mit dem Anhängerentlüftungsanschluss (186) verbunden ist, sodass der Anhänger-Redundanzdruck (pRA) über einen Anhänger-Entlüftungspfad des Anhängersteuerventils (180) an dem Anhängerbremsdruckanschluss (182) aussteuerbar ist.

19. Elektronisch steuerbares pneumatisches Bremssystem (1) nach einem der vorstehenden Ansprüche, wobei die elektronische Betriebssteuereinheit (10) mit einer ersten Spannungsquelle (204) und die elektronische Redundanzsteuereinheit (50) mit einer zweiten Spannungsquelle (206), die von der ersten Spannungsquelle (204) unabhängig ist, verbunden ist.

20. Elektronisch steuerbares pneumatisches Bremssystem (1) nach einem der vorstehenden Ansprüche, wobei der erste Druckluftvorrat (2) der weitere Druckluftvorrat (2A) unabhängig voneinander sind.

21. Elektronisch steuerbares pneumatisches Bremssystem (1) nach einem der vorstehenden Ansprüche, aufweisend eine Einheit für autonomes Fahren (210) und einen Fahrzeug-BUS (212), wobei die elektronische Betriebssteuereinheit (10) und die elektronische Redundanzsteuereinheit (50) über den Fahrzeug-BUS (212) oder eine alternative Netzwerkkommunikation mit der Einheit für autonomes Fahren (210) verbunden sind und von dieser Bremsanforderungssignale (SA) empfangen.

22. Fahrzeug (200), vorzugsweise Nutzfahrzeug (202), mit einer Vorderachse (VA), wenigstens einer Hinterachse (HA1, HA2) und einem elektronisch steuerbaren pneumatischen Bremssystem (1) nach einem der vorstehenden Ansprüche.

23. Fahrzeug (200) nach Anspruch 22, wobei der ersten Bremsdruckmodulator (12) der Vorderachse (VA) und der zweiten Bremsdruckmodulator (100) der wenigstens einen Hinterachse (HA1, HA2) zugeordnet ist.

## Claims

1. Electronically controllable pneumatic brake system (1) for a vehicle (200), preferably a commercial vehicle (202), comprising:
an electronic operating control unit (10);
at least one first brake pressure modulator (12) which is connected to a first compressed air supply (2) for receiving supply pressure (pV), and which, in response to first operating brake signals (SB1) provided by the electronic operating control unit (10), controls a first operating brake pressure (pB1) at at least one first operating brake pressure port (14),
an electronic redundancy control unit (50);
at least one first redundancy pressure modulator (52) which is connected to the first compressed air supply (2) or to a further compressed air supply (2A) for receiving supply pressure (pV), and which, in response to first redundancy brake signals (SR1) provided by the electronic redundancy control unit (50), controls a first redundancy brake pressure (pR1) at at least one first redundancy brake pressure port (54),
**characterized in that**
the first brake pressure modulator (12) comprises a first vent port (16) for venting the first operating brake pressure (pB1),
the first redundancy pressure modulator (52) comprises a first redundancy vent port (55) for venting the first redundancy brake pressure (pR1) and
the first redundancy brake pressure port (54) is connected to the first vent port (16) so that the first redundancy brake pressure (pR1) is controllable via a first vent path (17) of the first brake pressure modulator (12) at the first operating brake pressure port (14).

2. Electronically controllable pneumatic brake system (1) according to claim 1, wherein the first brake pressure modulator (12) comprises, at the first vent port (16), a first quick vent valve (40) for venting the first operating brake pressure (pB1).

3. Electronically controllable pneumatic brake system (1) according to claim 2, wherein the first quick vent valve (40) comprises a first quick vent valve port (40.1) connected to the first vent path (17), a second quick vent valve port (40.2) connected to the environment, and a third quick vent valve port (40.3) connected to the first redundancy brake pressure port (54).

4. Electronically controllable pneumatic brake system (1) according to any of the preceding claims, wherein the first brake pressure modulator (12) comprises a first operating relay valve (20) comprising: a first operating relay valve supply port (20.1) connected to a first supply port (22), a first operating relay valve working port (20.2) connected to the first operating brake pressure port (14), a first operating relay valve control port (20.3) which receives a first pilot control pressure (pS1), and a first operating relay valve vent port (20.4) which forms the first vent port (16) or is connected thereto.

5. Electronically controllable pneumatic brake system (1) according to claim 3 and claim 4, wherein the first operating relay valve vent port (20.4) is connected to the first quick vent valve port (40.1).

6. Electronically controllable pneumatic brake system (1) according to any of the preceding claims, comprising:
a second brake pressure modulator (100) which is connected to a second compressed air supply (4) for receiving supply pressure (pV), and which, in response to second operating brake signals (SB2) provided by the electronic operating control unit (10), controls at least one second operating brake pressure (pB2) at at least one second operating brake pressure port (104),
wherein the second brake pressure modulator (100) comprises a second vent port (106) for venting the second operating brake pressure (pB2);
a second redundancy pressure modulator (60) which is connected to the second compressed air supply (4) or to a further compressed air supply (4A) for receiving supply pressure (pV), and which, in response to second redundancy brake signals (SR2) provided by the electronic redundancy control unit (50), controls a second redundancy brake pressure (pR2) at at least one second redundancy brake pressure port (62),
wherein the second redundancy pressure modulator (60) comprises a second redundancy vent port (66) for venting the second redundancy brake pressure (pR2), and wherein
the second redundancy brake pressure port (62) is connected to the second vent port (106) so that the second redundancy brake pressure (pR2) is controllable via a second vent path (107) of the second brake pressure modulator (100) at the second operating brake pressure port (104).

7. Electronically controllable pneumatic brake system (1) according to claim 6, wherein the second brake pressure modulator (100) comprises, at the second vent port (106), a second quick vent valve (140) for venting the second operating brake pressure (pB2).

8. Electronically controllable pneumatic brake system (1) according to claim 7, wherein the second quick vent valve (140) comprises a fourth quick vent valve port (140.1) connected to the second vent path (107), a fifth quick vent valve port (140.2) connected to the environment, and a sixth quick vent valve port (140.3) connected to the second redundancy brake pressure port (62).

9. Electronically controllable pneumatic brake system (1) according to any of the preceding claims 6 to 8, wherein the second brake pressure modulator (100) comprises a second operating relay valve (120) comprising: a second operating relay valve supply port (120.1) connected to a second supply port (122), a second operating relay valve working port (120.2) connected to the second operating brake pressure port (104), a second operating relay valve control port (120.3) which receives a second pilot control pressure (pS2), and a second operating relay valve vent port (120.4) which forms the second vent port (106) or is connected thereto.

10. Electronically controllable pneumatic brake system (1) according to claim 8 and claim 9, wherein the second operating relay valve vent port (120.4) is connected to the fourth quick vent valve port (140.1).

11. Electronically controllable pneumatic brake system (1) according to any of the preceding claims, wherein the first brake pressure modulator (12) and/or the second brake pressure modulator (100) is designed to be dual-channel.

12. Electronically controllable pneumatic brake system (1) according to any of the preceding claims 6 to 10, wherein
the second brake pressure modulator (100) controls a third operating brake pressure (pB3) at at least third operating brake pressure port (105) in response to third operating brake signals (SB3) provided by the electronic operating control unit (10),
wherein the second brake pressure modulator (100) comprises a third vent port (108) for venting the third operating brake pressure (pB3);
wherein the second redundancy pressure modulator (60) controls a third redundancy brake pressure (pR3) at at least one third redundancy brake pressure port (64) in response to third redundancy brake signals (SR3) provided by the electronic redundancy control unit (50),
wherein the second redundancy vent port (66) is effective for venting the third redundancy brake pressure (pR3), and wherein
the third redundancy brake pressure port (64) is connected to the third vent port (108) so that the third redundancy brake pressure (pR3) is controllable via a third vent path (109) of the second brake pressure modulator (100) at the third operating brake pressure port (105).

13. Electronically controllable pneumatic brake system (1) according to claim 12, wherein the second brake pressure modulator (100) comprises, at the third vent port (108), a third quick vent valve (150) for venting the third operating brake pressure (pB3).

14. Electronically controllable pneumatic brake system (1) according to claim 13, wherein the third quick vent valve (150) comprises a seventh quick vent valve port (150.1) connected to the third vent path (109), an eighth quick vent valve port (150.2) connected to the environment, and a ninth quick vent valve port (150.3) connected to the third redundancy brake pressure port (64).

15. Electronically controllable pneumatic brake system (1) according to any of the preceding claims 12 to 14, wherein the second brake pressure modulator (100) comprises a third operating relay valve (130) comprising: a third operating relay valve supply port (130.1) connected to the second supply port (122), a third operating relay valve working port (130.2) connected to the third operating brake pressure port (105), a third operating relay valve control port (130.3) which receives a third pilot control pressure (pS3), and a third operating relay valve vent port (130.4) which forms the third vent port (108) or is connected thereto.

16. Electronically controllable pneumatic brake system (1) according to claim 14 and claim 15, wherein the third operating relay valve vent port (130.4) is connected to the seventh quick vent valve port (150.1).

17. Electronically controllable pneumatic brake system (1) according to any of the preceding claims, comprising:
a trailer control valve (180) at least comprising: a trailer brake pressure port (182) for providing a trailer brake pressure (pBA) for a trailer, a trailer supply port (183) for receiving supply pressure (pV), and a trailer vent port (186) for venting the trailer brake pressure (pBA);
wherein the trailer control valve (180) is connected to the electronic operating control unit (10) and receives trailer brake signals (SBA) therefrom and controls the trailer brake pressure (pBA) based on said signals; and

18. Electronically controllable pneumatic brake system (1) according to claim 17, wherein
the first redundancy pressure modulator (52) or the second redundancy pressure modulator (100) comprises a trailer redundancy brake pressure port (56) for providing a trailer redundancy pressure (pRA),
and wherein the trailer redundancy brake pressure port (56) is connected to the trailer vent port (186) so that the trailer redundancy pressure (pRA) is controllable via a trailer vent path of the trailer control valve (180) at the trailer brake pressure port (182).

19. Electronically controllable pneumatic brake system (1) according to any of the preceding claims, wherein the electronic operating control unit (10) is connected to a first voltage source (204), and the electronic redundancy control unit (50) is connected to a second voltage source (206) which is independent of the first voltage source (204).

20. Electronically controllable pneumatic brake system (1) according to any of the preceding claims, wherein the first compressed air supply (2) and the further compressed air supply (2A) are independent of one another.

21. Electronically controllable pneumatic brake system (1) according to any of the preceding claims, comprising a unit for autonomous driving (210) and a vehicle bus (212), wherein the electronic operating control unit (10) and the electronic redundancy control unit (50) are connected, via the vehicle bus (212) or an alternative network communication, to the unit for autonomous driving (210) and receive brake request signals (SA) therefrom.

22. Vehicle (200), preferably a commercial vehicle (202), comprising a front axle (VA), at least one rear axle (HA1, HA2) and an electronically controllable pneumatic brake system (1) according to any of the preceding claims.

23. Vehicle (200) according to claim 22, wherein the first brake pressure modulator (12) is assigned to the front axle (VA) and the second brake pressure modulator (100) is assigned to the at least one rear axle (HA1, HA2).

## Revendications

1. Système de freinage pneumatique (1) pouvant être commandé électroniquement pour un véhicule (200), de préférence un véhicule utilitaire (202), comportant
une unité de commande de service (10) électronique ;
au moins un premier modulateur de pression de freinage (12) qui est relié à une première réserve d'air comprimé (2) pour recevoir une pression de réserve (pV) et qui, en fonction de premiers signaux de freinage de service (SB1) qui sont mis à disposition par l'unité de commande de service (10) électronique, commande une première pression de freinage de service (pB1) au niveau d'au moins un premier raccord de pression de freinage de service (14),
une unité de commande de redondance (50) électronique ;
au moins un premier modulateur de pression de redondance (52) qui est relié à la première réserve d'air comprimé (2) ou à une autre réserve d'air comprimé (2A) pour recevoir la pression de réserve (pV) et qui, en fonction de premiers signaux de freinage de redondance (SR1) qui sont mis à disposition par l'unité de commande de redondance (50) électronique, commande une première pression de freinage de redondance (pR1) au niveau d'au moins un premier raccord de pression de freinage de redondance (54),
**caractérisé en ce que**
le premier modulateur de pression de freinage (12) présente un premier raccord de purge (16) permettant de purger la première pression de freinage de service (pB1),
le premier modulateur de pression de redondance (52) présente un premier raccord de purge de redondance (55) permettant de purger la première pression de freinage de redondance (pR1) et
le premier raccord de pression de freinage de redondance (54) est relié au premier raccord de purge (16), de sorte que la première pression de freinage de redondance (pR1) peut être réglée par l'intermédiaire d'un premier trajet de purge (17) du premier modulateur de pression de freinage (12) au niveau du premier raccord de pression de freinage de service (14).

2. Système de freinage pneumatique (1) pouvant être commandé électroniquement selon la revendication 1, dans lequel le premier modulateur de pression de freinage (12) présente une première soupape de purge rapide (40) au niveau du premier raccord de purge (16), pour purger la première pression de freinage de service (pB1).

3. Système de freinage pneumatique (1) pouvant être commandé électroniquement selon la revendication 2, dans lequel la première soupape de purge rapide (40) présente un premier raccord de soupape de purge rapide (40.1) relié au premier trajet de purge (17), un deuxième raccord de soupape de purge rapide (40.2) relié à l'environnement et un troisième raccord de soupape de purge rapide (40.3) relié au premier raccord de pression de freinage de redondance (54).

4. Système de freinage pneumatique (1) pouvant être commandé électroniquement selon l'une des revendications précédentes, dans lequel le premier modulateur de pression de freinage (12) présente une première soupape relais de service (20) qui présente un premier raccord de réserve de soupape relais de service (20.1) relié à un premier raccord de réserve (22), un premier raccord de travail de soupape relais de service (20.2) relié au premier raccord de pression de freinage de service (14), un premier raccord de commande de soupape relais de service (20.3) recevant une première pression pilote (pS1) et un premier raccord de purge de soupape relais de service (20.4) formant le premier raccord de purge (16) ou relié à celui-ci.

5. Système de freinage pneumatique (1) pouvant être commandé électroniquement selon les revendications 3 et 4, dans lequel le premier raccord de purge de soupape relais de service (20.4) est relié au premier raccord de soupape de purge rapide (40.1).

6. Système de freinage pneumatique (1) pouvant être commandé électroniquement selon l'une des revendications précédentes, présentant
un second modulateur de pression de freinage (100) qui est relié à une seconde réserve d'air comprimé (4) pour recevoir la pression de réserve (pV) et qui, en fonction de deuxièmes signaux de freinage de service (SB2) qui sont mis à disposition par l'unité de commande de service (10) électronique, commande au moins une deuxième pression de freinage de service (pB2) au niveau d'au moins un deuxième raccord de pression de freinage de service (104),
dans lequel le second modulateur de pression de freinage (100) présente un second raccord de purge (106) pour purger la deuxième pression de freinage de service (PB2) ;
un second modulateur de pression de redondance (60) qui est relié à la seconde réserve d'air comprimé (4) ou à une autre réserve d'air comprimé (4A) pour recevoir la pression de réserve (pV) et qui, en fonction de deuxièmes signaux de freinage de redondance (SR2) qui sont mis à disposition par l'unité de commande de redondance (50) électronique, commande une deuxième pression de freinage de redondance (pR2) au niveau d'au moins un deuxième raccord de pression de freinage de redondance (62),
dans lequel le second modulateur de pression de redondance (60) présente un deuxième raccord de purge de redondance (66) pour purger la deuxième pression de freinage de redondance (pR2), et dans lequel
le deuxième raccord de pression de freinage de redondance (62) est relié au deuxième raccord de purge (106), de sorte que la deuxième pression de freinage de redondance (pR2) peut être réglée par l'intermédiaire d'un deuxième trajet de purge (107) du second modulateur de pression de freinage (100) au niveau du deuxième raccord de pression de freinage de service (104).

7. Système de freinage pneumatique (1) pouvant être commandé électroniquement selon la revendication 6, dans lequel le second modulateur de pression de freinage (100) présente une deuxième soupape de purge rapide (140) au niveau du deuxième raccord de purge (106), pour purger la deuxième pression de freinage de service (pB2).

8. Système de freinage pneumatique (1) pouvant être commandé électroniquement selon la revendication 7, dans lequel la deuxième soupape de purge rapide (140) présente un quatrième raccord de soupape de purge rapide (140.1) relié au deuxième trajet de purge (107), un cinquième raccord de soupape de purge rapide (140.2) relié à l'environnement et un sixième raccord de soupape de purge rapide (140.3) relié au deuxième raccord de pression de freinage de redondance (62).

9. Système de freinage pneumatique (1) pouvant être commandé électroniquement selon l'une des revendications 6 à 8 précédentes, dans lequel le second modulateur de pression de freinage (100) présente une deuxième soupape relais de service (120) qui présente un deuxième raccord de réserve de soupape relais de service (120.1) relié à un deuxième raccord de réserve (122), un deuxième raccord de travail de soupape relais de service (120.2) relié au deuxième raccord de pression de freinage de service (104), un deuxième raccord de commande de soupape relais de service (120.3) recevant une deuxième pression pilote (pS2) et un deuxième raccord de purge de soupape relais de service (120.4) formant le deuxième raccord de purge (106) ou relié à celui-ci.

10. Système de freinage pneumatique (1) pouvant être commandé électroniquement selon les revendications 8 et 9, dans lequel le deuxième raccord de purge de soupape relais de service (120.4) est relié au quatrième raccord de soupape de purge rapide (140.1).

11. Système de freinage pneumatique (1) pouvant être commandé électroniquement selon l'une des revendications précédentes, dans lequel le premier modulateur de pression de freinage (12) et/ou le second modulateur de pression de freinage (100) sont réalisés avec deux canaux.

12. Système de freinage pneumatique (1) pouvant être commandé électroniquement selon l'une des revendications 6 à 10 précédentes, dans lequel
le second modulateur de pression de freinage (100) commande une troisième pression de freinage de service (pB3) au niveau d'au moins un troisième raccord de pression de freinage de service (105) en fonction de troisièmes signaux de freinage de service (SB3) qui sont mis à disposition par l'unité de commande de service (10) électronique,
dans lequel le second modulateur de pression de freinage (100) présente un troisième raccord de purge (108) pour purger la troisième pression de freinage de service (pB3) ;
dans lequel le second modulateur de pression de redondance (60) commande une troisième pression de freinage de redondance (pR3) au niveau d'au moins un troisième raccord de pression de freinage de redondance (64) en fonction de troisièmes signaux de freinage de redondance (SR3) qui sont mis à disposition par l'unité de commande de redondance (50) électronique,
dans lequel le second raccord de purge de redondance (66) est efficace pour purger la troisième pression de freinage de redondance (pR3), et dans lequel
le troisième raccord de pression de freinage de redondance (64) est relié au troisième raccord de purge (108), de sorte que la troisième pression de freinage de redondance (pR3) peut être commandée par l'intermédiaire d'un troisième trajet de purge (109) du second modulateur de pression de freinage (100) au niveau du troisième raccord de pression de freinage de service (105).

13. Système de freinage pneumatique (1) pouvant être commandé électroniquement selon la revendication 12, dans lequel le second modulateur de pression de freinage (100) présente une troisième soupape de purge rapide (150) au niveau du troisième raccord de purge (108), pour purger la troisième pression de freinage de service (pB3).

14. Système de freinage pneumatique (1) pouvant être commandé électroniquement selon la revendication 13, dans lequel la troisième soupape de purge rapide (150) présente un septième raccord de soupape de purge rapide (150.1) relié au troisième trajet de purge (109), un huitième raccord de soupape de purge rapide (150.2) relié à l'environnement et un neuvième raccord de soupape de purge rapide (150.3) relié au troisième raccord de pression de freinage de redondance (64).

15. Système de freinage pneumatique (1) pouvant être commandé électroniquement selon l'une des revendications 12 à 14 précédentes, dans lequel le second modulateur de pression de freinage (100) présente une troisième soupape relais de service (130) qui présente un troisième raccord de réserve de soupape relais de service (130.1) relié au deuxième raccord de réserve (122), un troisième raccord de travail de soupape relais de service (130.2) relié au troisième raccord de pression de freinage de service (105), un troisième raccord de commande de soupape relais de service (130.3) recevant une troisième pression pilote (pS3) et un troisième raccord de purge de soupape relais de service (130.4) formant le troisième raccord de purge (108) ou relié à celui-ci.

16. Système de freinage pneumatique (1) pouvant être commandé électroniquement selon les revendications 14 et 15, dans lequel le troisième raccord de purge de soupape relais de service (130.4) est relié au septième raccord de soupape de purge rapide (150.1).

17. Système de freinage pneumatique (1) pouvant être commandé électroniquement selon l'une des revendications précédentes, présentant
une soupape de commande de remorque (180) comportant au moins un raccord de pression de freinage de remorque (182) permettant de mettre à disposition une pression de freinage de remorque (pBA) pour une remorque, un raccord de réserve de remorque (183) permettant de recevoir une pression de réserve (pV), et un raccord de purge de remorque (186) permettant de purger la pression de freinage de remorque (pBA) ;
dans lequel la soupape de commande de remorque (180) est reliée à l'unité de commande de service (10) électronique et reçoit des signaux de freinage de remorque (SBA) en provenance de celle-ci et commande la pression de freinage de remorque (pBA) sur la base de ceux-ci ; et

18. Système de freinage pneumatique (1) pouvant être commandé électroniquement selon la revendication 17, dans lequel
le premier modulateur de pression de redondance (52) ou le second modulateur de pression de redondance (100) présente un raccord de pression de freinage de redondance de remorque (56) permettant de mettre à disposition une pression de redondance de remorque (pRA),
et dans lequel le raccord de pression de freinage de redondance de remorque (56) est relié au raccord de purge de remorque (186), de sorte que la pression de redondance de remorque (pRA) peut être commandée par l'intermédiaire d'un trajet de purge de remorque de la soupape de commande de remorque (180) au niveau du raccord de pression de freinage de remorque (182).

19. Système de freinage pneumatique (1) pouvant être commandé électroniquement selon l'une des revendications précédentes, dans lequel l'unité de commande de service (10) électronique est connectée à une première source de tension (204) et l'unité de commande de redondance (50) électronique est connectée à une seconde source de tension (206) indépendante de la première source de tension (204).

20. Système de freinage pneumatique (1) pouvant être commandé électroniquement selon l'une des revendications précédentes, dans lequel la première réserve d'air comprimé (2) et l'autre réserve d'air comprimé (2A) sont indépendantes l'une de l'autre.

21. Système de freinage pneumatique (1) pouvant être commandé électroniquement selon l'une des revendications précédentes, présentant une unité pour la conduite autonome (210) et un BUS de véhicule (212), dans lequel l'unité de commande de service (10) électronique et l'unité de commande de redondance (50) électronique sont connectées à l'unité pour la conduite autonome (210) et reçoivent des signaux de demande de freinage (SA) en provenance de celle-ci par l'intermédiaire du BUS de véhicule (212) ou d'une communication de réseau alternative.

22. Véhicule (200), de préférence véhicule utilitaire (202), comportant un essieu avant (VA), au moins un essieu arrière (HA1, HA2) et un système de freinage pneumatique (1) pouvant être commandé électroniquement selon l'une des revendications précédentes.

23. Véhicule (200) selon la revendication 22, dans lequel le premier modulateur de pression de freinage (12) est associé à l'essieu avant (VA) et le second modulateur de pression de freinage (100) est associé à l'au moins un essieu arrière (HA1, HA2).
